# EUROPEAN PATENT APPLICATION

(11) **EP 3 720 181 A1**
(43) Date of publication of application: **07.10.2020**
(21) Application number: 18882979.0
(22) Date of filing: 06.09.2018
(51) Int. Cl.: H04W 36/00

(54) **NETWORK SLICE PROCESSING METHOD AND ACCESS NETWORK NETWORK ELEMENT**

(30) Priority: 28.11.2017 CN 201711216969
(71) Applicant: China Mobile Communication Co., Ltd Research Institute, Beijing 100053 (CN); China Mobile Communications Group Co., Ltd, Beijing 100032 (CN)
(72) Inventor: CHEN, Yami, Beijing 100032 (CN); LI, Gang, Beijing 100032 (CN); HAN, Shuangfeng, Beijing 100032 (CN)
(74) Representative: Gunzelmann, Rainer
(86) International application number: PCT/CN2018/104281
(87) International publication number: WO 2019/105095

(57) **Abstract**

Embodiments of the present disclosure provide a method of processing a network slice and an access-network node, which relate to a communication field. The method of processing a network slice includes: receiving network-slice information, wherein the network-slice information includes at least one of following: network-slice available resource information; network-slice quality-of-service information; network-slice networking information; network-slice resource allocation information; network-slice access control information; network-slice report configuration/control information; network-slice user information; network-slice service information; network-slice resource-demand change information; network-slice resource occupation information; network-slice interference-coordination information; network-slice movement control parameter.

## Description

### CROSS-REFERENCE TO RELATED APPLICATION

This application claims a priority to Chinese Patent Application No. 201711216969.2 filed in China on November 28, 2017, the disclosures of which are incorporated in their entirety by reference herein.

### TECHNICAL FIELD

The present disclosure relates to the field of communication, in particular, relates to a method of processing a network slice and an access-network node.

### BACKGROUND

A Fifth-Generation (5G) network slice is an important tool of an operator for meeting highly differentiated 5G vertical application scenarios and providing a horizontal support platform. An important characteristics of a network slice includes meeting differentiated service requirements, realizing resource-sharing and resource-isolation. A current Radio Access Network (RAN) standard mainly discusses perception of slice information at a network interface. However, there is still no solution for how a satisfactory service requirement is customized for a radio network based on slice perception, how to manage slices to maximize network-resource sharing under a condition that slice isolation is achieved, how to perform awareness and interaction of slice information at a RAN side, and make a slice-related decision.

### SUMMARY

The present disclosure provides a method of processing a network slice and an access-network node, so as to solve problems of performing awareness and interaction of slice information at a RAN side, and making a slice-related decision and distributing the decision.

To solve the above technical problems, the embodiments of the present disclosure provide the following solutions.

A method of processing a network slice is provided in the present disclosure. The method is applied in an access-network node. The method includes: receiving network-slice information, wherein the network-slice information includes at least one of following: network-slice available resource information; network-slice quality-of-service information; network-slice networking information; network-slice resource allocation information; network-slice access control information; network-slice report configuration/control information; network-slice user information; network-slice service information; network-slice resource-demand change information; network-slice resource occupation information; network-slice interference-coordination information; network-slice movement control information.

Wherein, the network-slice available resource information includes at least one of following: a remaining resource available to a network slice, and remaining number of users admissible by a network slice; or, the network-slice quality-of-service information includes at least one of following: a network-slice resource type; a network slice priority; a network-slice delay budget; a network-slice packet-error-rate index; a network-slice aggregated bit rate; a network-slice guaranteed bit rate; a network-slice averaging window size; the number of users admissible by a network slice; a network-slice allocation reservation priority (ARP); a network-slice reflection quality-of-service indication (RQI); network-slice notification control information; or, the network-slice networking information includes at least one of following: network-slice configuration information, network-slice activation information, and network-slice deactivation information; or, the network-slice resource allocation information includes at least one of following: the number of network slice resources; a proportion of network slice resources; network-slice guaranteed resources; network-slice aggregated resources; network-slice resource-sharing threshold, wherein the resources include at least one of following resources: a radio network resource, a computing resource, and a storage resource; or, the network-slice report configuration/control information includes at least one of following: network-slice reporting information and information-reporting time/occasion information, wherein the network-slice reporting information includes at least one of following: network-slice available resource information, network-slice performance monitoring information, network-slice traffic-volume information, network-slice radio link/coverage quality information, and network-slice resource occupation information; or, the network-slice user information includes at least one of following: location change information of a user of a network slice, service-type change information of a user of a network slice, and traffic-volume change information of a user of a network slice; or, the network-slice service information includes at least one of following: network-slice service-type change information, network-slice traffic-volume change information, and network-slice user-amount change information; or, the network-slice resource-demand change information includes network-slice resource-occupancy change information; or, the network-slice movement control parameter includes at least one of following: slice cell-reselection information and slice mobility information.

Wherein receiving the network-slice information is specifically: receiving the network-slice information from a core-network node, an access-network node, and/or a network administration-and-management entity.

Wherein receiving the network-slice information is specifically: receiving the Quality-of-Service information in the network-slice information from a core-network node; and/or, receiving the network-slice networking information, the network-slice resource allocation information, the network-slice report configuration/control information, the network-slice resource-demand change information and/or the network-slice movement control parameter in the network-slice information from a core-network node and/or a network administration-and-management entity; and/or, receiving, from a neighboring access-network node, the network-slice available resource information, the network-slice resource occupancy information, the network-slice interference-coordination information, and/or the network-slice movement control parameter in the network-slice information.

Wherein receiving the network-slice information is specifically receiving network-slice information, from a core-network node, in the network-slice information through an interface establishment signaling, an access-network-node configuration updating signaling, a core-network-node configuration updating signaling, an information-reporting / reporting-configuration / reporting-control signaling, a Quality-of-Service information updating signaling, a network-slice configuration updating signaling, a user-related signaling or a session-related signaling between the access-network node and the core-network node; and/or, receiving network-slice information, from a neighboring access-network node, in the network-slice information through a resource state signaling, an interface establishment signaling, an access-network-node configuration updating signaling, a dual-connection related signaling, a mobility modification signaling, a Quality-of-Service information updating signaling, a network-slice configuration updating signaling, a user-related signaling or a session-related signaling between access-network nodes.

Wherein the access-network node is a base station including a centralized unit and a distributed unit; receiving the network-slice information is specifically receiving the network-slice information from a core network by the centralized unit; and/or, receiving the network-slice information from a neighboring access-network node by the centralized unit; and/or, receiving network-slice information from a network administration-and-management entity by the centralized unit and/or the distributed unit.

The above method of processing the network slice further includes: sending, by the centralized unit to the distributed unit, at least one of following received by the centralized unit: network-slice quality-of-service information; network-slice protocol configuration information; system information dedicated to a network slice; network-slice identifier information; network-slice resource allocation information; network-slice report configuration/control information.

Wherein the centralized unit and the distributed unit transmit the network-slice information through an interface establishment signaling, a centralized-unit configuration updating signaling, a distributed-unit configuration updating signaling, an information-reporting /reporting-configuration /reporting-control signaling, a user-related signaling or a session-related signaling.

Wherein receiving the network-slice information from the network administration-and-management entity by the distributed unit specifically is receiving, by the distributed unit, at least one of following sent by the network administration-and-management entity: resource allocation information, network-slice networking information, network-slice reporting configuration.

Wherein the access-network node is a base station including a centralized unit and a distributed unit; the centralized unit includes a control-plane unit and a user-plane unit, and receiving the network-slice information specifically includes: receiving a portion, from a core-network node and/or a neighboring access-network node, of the network-slice information by the control-plane unit; and/or, receiving a portion, from the network administration-and-management entity, of the network-slice information by the control-plane unit and/or the user-plane unit.

The method of processing a network slice further includes: sending, by the control-plane unit to the user-plane unit, at least one of following received by the control-plane unit: network-slice quality-of-service information, network-slice protocol configuration information, network-slice identifier information, network-slice resource allocation information, network-slice report configuration/control information.

Wherein the user-plane unit receives the network-slice resource allocation information, the network-slice networking information, and/or the network-slice report configuration/control information, in the network-slice information, from the network administration-and-management entity.

Wherein the control-plane unit and the user-plane unit transmit the network-slice information through an interface establishment signaling, a control-plane-unit configuration update signaling, a user-plane configuration updating signaling, an information-reporting /reporting-configuration/reporting-control signaling, a user-related signaling or a session-related signaling between the control-plane unit and the user-plane unit.

The method of processing a network slice further includes reporting capability information and/or state information of the network slice.

Wherein the access-network node is a base station including a centralized unit and a distributed unit; reporting the capability information and/or state information of the network slice specifically includes: sending the capability information and/or state information of the network slice to the centralized unit by the distributed unit.

Wherein reporting the capability information and/or state information of the network slice further includes: receiving, by the centralized unit, the capability information and/or state information of the network slice sent from the distributed unit.

Wherein reporting the capability information and/or state information of the network slice further includes: reporting, by the centralized unit, the received capability information and/or state information of the network slice through a measurement reporting signaling.

Wherein the access-network node is a base station including a centralized unit and a distributed unit, and reporting the capability information and/or state information of the network slice further includes: reporting, by the distributed unit, the capability information and/or state information of the network slice through a measurement reporting signaling.

Wherein the access-network node is a base station including a centralized unit and a distributed unit; the centralized unit includes a control-plane unit and a user-plane unit, wherein reporting the capability information and/or state information of the network slice specifically includes sending the capability information and/or state information of the network slice to the control-plane unit by the user-plane unit.

Wherein the access-network node is a base station including a centralized unit and a distributed unit; the centralized unit includes a control-plane unit and a user-plane unit, wherein reporting the capability information and/or state information of the network slice further includes receiving, by the control-plane unit, the capability information and/or state information of the network slice sent from the user-plane unit by the control-plane unit.

Wherein reporting the capability information and/or state information of the network slice further includes sending the capability information and/or state information by the user-plane unit through a measurement reporting signaling.

Wherein the state information includes at least one of following: network-slice available resource information, network-slice performance monitoring information, network-slice traffic-volume information, network-slice radio link/coverage quality information, and network-slice resource occupation information.

Wherein reporting the capability information and/or state information of the network slice specifically is reporting, by the access-network node, the capability information and/or state information of the network slice to a core-network node, a neighboring access-network node and/or a network administration-and-management entity.

Wherein the network-slice information includes network-slice identifier information.

The embodiments of the present disclosure further provides an access-network node. The access-network node is configured for receiving network-slice information; wherein the network-slice information includes at least one of following: network-slice available resource information; network-slice quality-of-service information; network-slice networking information; network-slice resource allocation information; network-slice access control information; network-slice report configuration/control information; network-slice user information; network-slice service information; network-slice resource-demand change information; network-slice resource occupation information; network-slice interference-coordination information; network-slice movement control information.

Wherein, the network-slice available resource information includes at least one of following: a remaining resource available to a network slice, and remaining number of users admissible by a network slice; or, the network-slice quality-of-service information includes at least one of following: a network-slice resource type; a network slice priority; a network-slice delay budget; a network-slice packet-error-rate index; a network-slice aggregated bit rate; a network-slice guaranteed bit rate; a network-slice averaging window size; the number of users admissible by a network slice; a network-slice allocation reservation priority (ARP); a network-slice reflection quality-of-service indication (RQI); network-slice notification control information; or, the network-slice networking information includes at least one of following: network-slice configuration information, network-slice activation information, and network-slice deactivation information; or, the network-slice resource allocation information includes at least one of following: the number of network slice resources; a proportion of network slice resources; network-slice guaranteed resources; network-slice aggregated resources; network-slice resource-sharing threshold, wherein the resources include at least one of following resources: a radio network resource, a computing resource, and a storage resource; or, the network-slice report configuration/control information includes at least one of following: network-slice available resource information, network-slice performance monitoring information, network-slice traffic-volume information, network-slice radio link/coverage quality information, and network-slice resource occupation information; or, the network-slice user information includes at least one of following: location change information of a user of a network slice, service-type change information of a user of a network slice, and traffic-volume change information of a user of a network slice; or, the network-slice service information includes at least one of following: network-slice service-type change information, network-slice traffic-volume change information, and network-slice user-amount change information; or, the network-slice resource-demand change information includes network-slice resource-occupancy change information; or, the network-slice movement control parameter includes at least one of following: slice cell-reselection information and slice mobility information.

Wherein the access-network node is specifically configured for receiving the network-slice information from a core-network node, an access-network node, and/or a network administration-and-management entity.

Wherein the access-network node is a base station including a centralized unit and a distributed unit; receiving the network-slice information specifically is receiving the network-slice information from a core network by the centralized unit; and/or receiving the network-slice information from a neighboring access-network node by the centralized unit; and/or, receiving network-slice information from a network administration-and-management entity by the centralized unit and/or the distributed unit.

The access-network node is a base station including a centralized unit and a distributed unit; the centralized unit includes a control-plane unit and a user-plane unit, and receiving the network-slice information specifically includes: receiving a portion, from a core-network node and/or a neighboring access-network node, of the network-slice information by the control-plane unit; and/or receiving a portion, from the network administration-and-management entity, of the network-slice information by the control-plane unit and/or the user-plane unit.

Wherein the access-network node is further configured for reporting capability information and/or state information of the network slice.

Wherein the network-slice information includes network-slice identifier information.

The embodiments of the present disclosure further provide a method of processing network-slice information. The method is applied in base station including a centralized unit and a distributed unit, the method includes: sending at least one of following to the distributed unit by the centralized unit: network-slice quality-of-service information, network-slice protocol configuration information, system information dedicated to a network slice, network-slice identifier information, network-slice resource allocation information, and network-slice report configuration/control information.

Wherein the centralized unit and the distributed unit transmit the network-slice information through an interface establishment signaling, a centralized-unit configuration updating signaling, a distributed-unit configuration updating signaling, an information-reporting /reporting-configuration /reporting-control signaling, a user-related signaling or a session-related signaling.

The embodiments of the present disclosure further provide a method of processing network-slice information. The method is applied in a base station including a control-plane unit and a user-plane unit. The method includes: sending, by the control-plane unit to the user-plane unit, at least one of following: network-slice quality-of-service information; network-slice protocol configuration information; network-slice identifier information; network-slice resource allocation information; network-slice report configuration/control information.

Wherein the control-plane unit and the user-plane unit transmit the network-slice information through an interface establishment signaling, a control-plane-unit configuration update signaling, a user-plane configuration updating signaling, an information-reporting /reporting-configuration /reporting-control signaling, a user-related signaling or a session-related signaling between the control-plane unit and the user-plane unit.

The embodiments of the present disclosure further provide a base station. The base station includes a centralized unit and a distributed unit, wherein the centralized unit is specifically configured for: sending at least one of following to the distributed unit: network-slice quality-of-service information; network-slice protocol configuration information; system information dedicated to a network slice; network-slice identifier information; network-slice resource allocation information; network-slice report configuration/control information.

Wherein the centralized unit and the distributed unit transmit the network-slice information through an interface establishment signaling, a centralized-unit configuration updating signaling, a distributed-unit configuration updating signaling, an information-reporting /reporting-configuration /reporting-control signaling, a user-related signaling or a session-related signaling.

The embodiments of the present disclosure further provide a base station. The base station includes a control-plane unit and a user-plane unit, wherein the control-plane unit is specifically configured for sending, to the user-plane unit, at least one of following: network-slice quality-of-service information; network-slice protocol configuration information; network-slice identifier information; network-slice resource allocation information; network-slice report configuration/control information.

Wherein the control-plane unit and the user-plane unit transmit the network-slice information through an interface establishment signaling, a control-plane-unit configuration update signaling, a user-plane configuration updating signaling, an information-reporting /reporting-configuration /reporting-control signaling, a user-related signaling or a session-related signaling between the control-plane unit and the user-plane unit.

The embodiments of the present disclosure further provide a method of processing network-slice information. The method includes: sending network-slice information, wherein the network-slice information includes at least one of following: network-slice available resource information; network-slice quality-of-service information; network-slice networking information; network-slice resource allocation information; network-slice access control information; network-slice report configuration/control information; network-slice user information; network-slice service information; network-slice resource-demand change information; network-slice resource occupation information; network-slice interference-coordination information; network-slice movement control information.

The embodiments of the present disclosure further provide a communication device. The communication device includes a transceiver, configuring for sending network-slice information, wherein the network-slice information includes at least one of following: network-slice available resource information; network-slice quality-of-service information; network-slice networking information; network-slice resource allocation information; network-slice access control information; network-slice report configuration/control information; network-slice user information; network-slice service information; network-slice resource-demand change information; network-slice resource occupation information; network-slice interference-coordination information; network-slice movement control information.

The embodiments of the present disclosure further provide an access-network node. The access-network node includes a processor, a storage having a computer program stored on the storage, wherein when the computer program is executed by the processor, the processor implements the methods provided above.

The embodiments of the present disclosure further provide a computer-readable storage medium. The computer-readable storage medium includes instructions, wherein when the instructions are executed by a computer, the computer implements the method provided above.

The above solutions of the present disclosure provide at least the following beneficial effects: in the solutions of the present disclosure, the access-network node receives network-slice information, wherein the network-slice information includes at least one of following: network-slice quality-of-service information; network-slice networking information; network-slice resource allocation information; network-slice access control information; network-slice report configuration/control information; network-slice user information; network-slice service information; network-slice resource-demand change information; network-slice resource occupation information; network-slice interference-coordination information; network-slice movement control information, and solve problems of performing awareness and interaction of slice information at a Radio Access Network (RAN) side, and making a slice-related decision and distributing the decision, and the solutions of the present disclosure may manage a network slice.

### BRIEF DESCRIPTION OF THE DRAWINGS

FIG. 1 is a schematic diagram of a proportion of network-slice resources in an embodiment of the present disclosure;
FIG. 2 is a schematic diagram of a process for transferring network-slice report configuration/control information between a network administration-and-management entity or other central network node carrying network data and an access-network node in an embodiment of the present disclosure;
FIG. 3 is a schematic diagram of receiving network-slice information from a core-network node, an access-network node, and/or a network administration-and-management entity;
FIG. 4 is a schematic diagram of receiving detailed contents of the network-slice information from the core-network node, the access-network node, and/or the network administration-and-management entity;
FIG. 5 is a schematic diagram of sending information to a distributed unit (DU) by a centralized unit (CU);
FIG. 6 is a schematic diagram of sending, by a control-plane unit to a user-plane unit, detailed contents of information received by the control-plane unit;
FIG. 7 is a schematic diagram of reporting capability information and/or state information of a network slice by an access-network node;
FIG. 8 is a schematic diagram of sending capability information and/or state information of a network slice by a distributed unit to a centralized unit;
FIG. 9 is a schematic diagram of QoS configuration of a network slice based on an NG-interface establishment signaling;
FIG. 10 is a schematic diagram of QoS configuration of a network slice based on an AMF configuration updating signaling;
FIG. 11 is a schematic diagram of slice QoS planning at a user level;
FIG. 12 is a schematic diagram of network-slice information reporting based on an NG-interface reporting signaling;
FIG. 13 is a schematic diagram of information interaction related to a network slice resource of a radio access-network node based on an Xn-interface resource state request/response;
FIG. 14 is a schematic diagram of a resource state updating signaling;
FIG. 15 is a schematic diagram of mobility control information interaction of a radio access network slice based on an Xn-interface mobility modification request/acknowledgement;
FIG. 16 is a schematic diagram of QoS configuration of a network slice based on an F1-interface establishment signaling;
FIG. 17 is a schematic diagram of network-slice information reporting based on an F1-interface reporting signaling;
FIG. 18 is a schematic diagram of transferring network-slice identifier information based on an F1-interface user context management process;
FIG. 19 is a schematic diagram of QoS configuration of a network slice based on an E1-interface establishment signaling;
FIG. 20 is a schematic diagram of network-slice information reporting based on an E1-interface reporting signaling;
FIG. 21 is a schematic diagram of transferring network-slice identifier information based on an E1-interface user context management process.

### DETAILED DESCRIPTION

Exemplary embodiments of the present disclosure will be described in more detail below with reference to the accompanying drawings. Although the exemplary embodiments of the present disclosure are shown in the drawings, it should be understood that the present disclosure may be implemented in various forms and should not be limited by the embodiments set forth herein. Rather, these embodiments are provided to enable a more thorough understanding of the present disclosure and to fully convey the scope of the present disclosure to those skilled in the art.

An embodiment of the present disclosure provides a method of processing a network slice, the method is applied in an access-network node. The processing method includes: receiving network-slice information, wherein the network-slice information includes at least one of following: network-slice Quality-of-Service (QoS) information; network-slice networking information; network-slice resource allocation information; network-slice access control information; network-slice report configuration/control information; network-slice user information; network-slice service information; network-slice resource-demand change information; network-slice resource occupation information; network-slice interference-coordination information; a network-slice movement control parameter.

In this embodiment of the present disclosure, after receiving the network-slice information, a slice management policy of a base station may be further adjusted based on the network-slice information. The slice management policy herein may include admission control of a network slice, scheduling configuration of a network slice, and setting of a parameter and a protocol of a network slice.

In this embodiment of the present disclosure, the network-slice information is received by the access-network node; the network-slice information includes at least one of following: network-slice available (remaining) resource information; network-slice quality-of-service information; network-slice networking information; network-slice resource allocation information; network-slice access control information; network-slice report configuration/control information; network-slice resource-demand change information; network slice resource occupation (load) information; network-slice interference-coordination information; a network-slice movement control parameter. In this way, problems of slice information awareness and interaction and slice-related decision-making and distribution at a Radio Access Network (RAN) side are addressed, and management of a network slice can be carried out.

In a specific embodiment of the present disclosure, it should be understood that the information may include a parameter, and that a parameter may also be information, such as slice cell-reselection information may be understood as a slice cell-reselection parameter, and slice mobility information may be understood as a slice mobility parameter.

In a specific embodiment of the present disclosure, the network-slice available resource information includes at least one of following: a remaining resource available to a network slice and remaining number of users admissible by the network slice.

In a specific embodiment of the present disclosure, the network-slice quality-of-service information includes at least one of following: a network-slice resource type, such as a QoS Flow supported by the slice; a network slice priority; a network-slice delay budget, which describes a delay budget that needs to be met for a slice user in respect of end-to-end or an RAN, and which can further partitioned into a user-plane delay budget, a control-plane delay budget and an access delay budget, and further may be partitioned into an average delay and a maximum delay, wherein the control-plane delay budget and the access delay budget are controlled per node; a network-slice packet-error-rate index, which describes a specification of packet-error-rate indexes of various slices; a network-slice aggregated bit rate, which describes a total aggregated bit rate of users served by a same set of slices needing to be supported on a cell; a network-slice guaranteed bit rate, which describes a lowest guaranteed bit rate of a user served by a same set of slices needing to be supported on a cell; a network-slice averaging window size, which describes sizes of computing windows of a slice-MBR and a slice-GBR; the number of users admissible by a network slice; the number of users admissible by a network slice (Slice maximum UE number), which describes a specification of a user capacity allowed by each slice; a network-slice allocation reservation priority (ARP); a network-slice reflection quality-of-service indication (RQI); network-slice notification control information (notification control); the network-slice quality-of-service information may also include other slice-related scheduling information, such as a mapping relationship configuration among a slice, a QoS, and a MAC logical channel.

In a specific embodiment of the present disclosure, the network-slice networking information includes at least one of following: network-slice configuration information, network-slice activation information, and network-slice deactivation information.

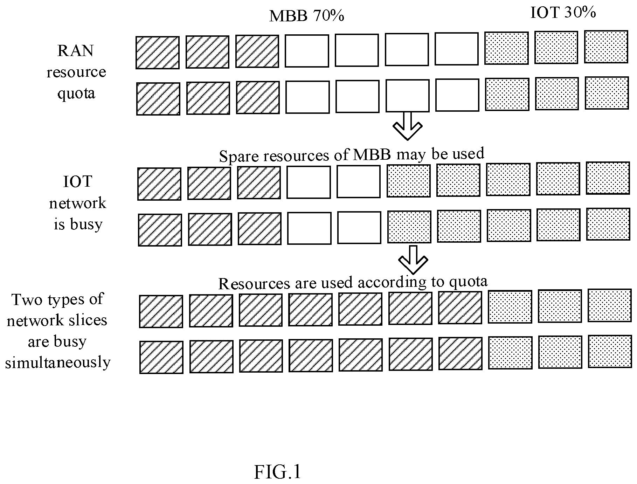

In a specific embodiment of the present disclosure, the network-slice resource allocation information includes at least one of following: the number of network slice resources; a proportion of network slice resources, as shown in FIG. 1, the number or a proportion quota of network-slice radio resources, such as for specifying a slice resource allocation when all slices are busy, such as proportions of 70% and 30% in the Figure; specifically in case of performing network-slice resource allocation, assuming that a network has a bandwidth of 100M, 70M can be allocated to eMBB, 30M allocated to IoT, or 70% to eMBB, 30% to IoT; network-slice guaranteed resources; network-slice aggregated resources; network-slice resource-sharing threshold, wherein the resource-sharing threshold may include the highest load threshold for which resource-sharing may be performed, and the lowest slice-resource reservation threshold for ensuring a service capability of a network slice; a definition of a load threshold may be a load based on all available resources, or based on a quota of various network slices; the resources herein may include at least one of following resources: a radio network resource, a computing resource, and a storage resource.

In a specific embodiment of the present disclosure, the network-slice report configuration/control information includes at least one of following: a network-slice reporting parameter and a parameter reporting time/occasion, and the network-slice reporting parameter includes at least one of following parameters: network-slice available resource information, network-slice performance monitoring information, network-slice traffic-volume information, network-slice radio link/coverage quality information, and network-slice resource occupation information.

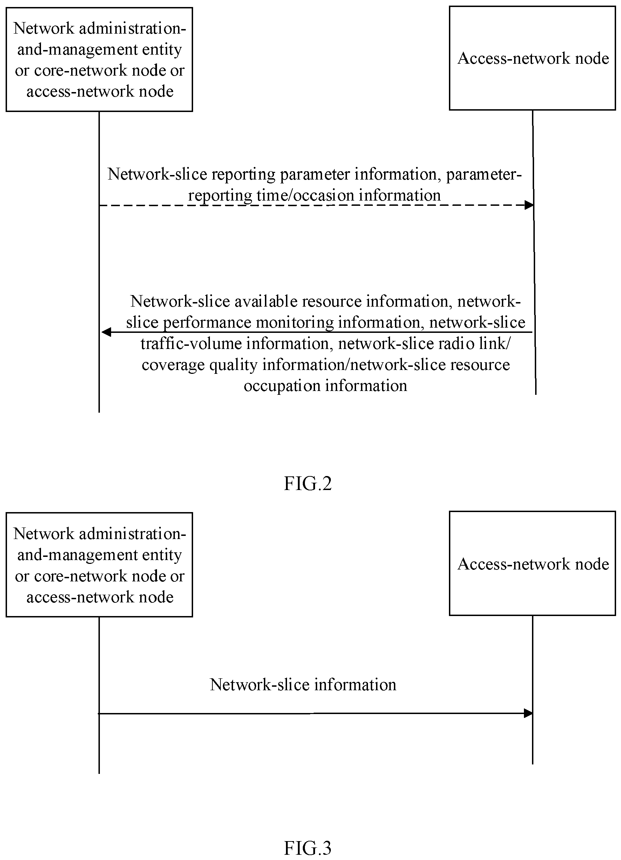

As shown in FIG. 2, the access-network node receives configuration of the network-slice reporting parameter and the parameter reporting time/occasion from the network administration-and-management entity or the core network or the access-network node; and the access-network node feeds, back to the network administration-and-management entity or the core network or the access-network node, corresponding network-slice resource occupation, network-slice performance monitoring, network-slice coverage/link quality, network-slice traffic volume, and so on.

In a specific embodiment of the present disclosure, the network-slice user information includes at least one of following: location change information of a user of a network slice, service-type change information of a user of a network slice, and traffic-volume change information of a user of a network slice.

In a specific embodiment of the present disclosure, the network-slice service information includes at least one of following: network-slice service-type change information, network-slice traffic-volume change information, and network-slice user-amount change information.

In a specific embodiment of the present disclosure, the network-slice resource-demand change information includes network-slice resource-occupancy change information.

In a specific embodiment of the present disclosure, the network-slice movement control parameter includes at least one of following: a slice cell-reselection parameter and a slice mobility parameter.

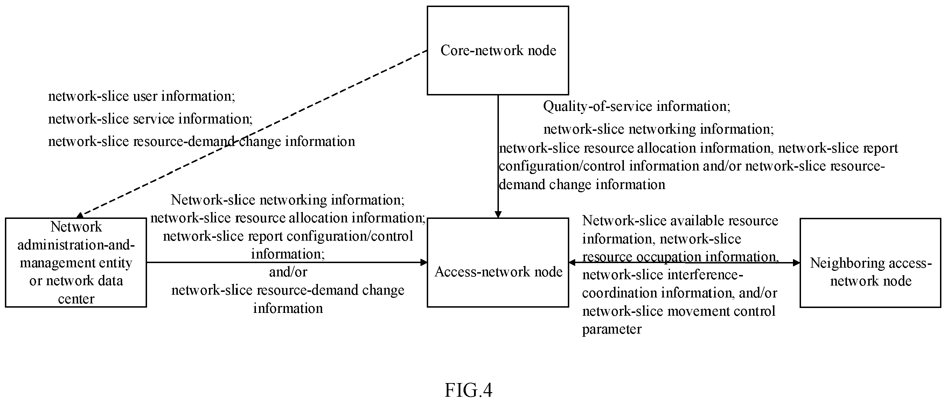

In a specific embodiment of the present disclosure, as shown in FIGs. 3 and 4, receiving the network-slice information is specifically: receiving the network-slice information from a core-network node, an access-network node, and/or a network administration-and-management entity.

In a specific embodiment of the present disclosure, receiving the network-slice information is specifically: receiving Quality-of-Service information in the network-slice information from the core-network node, and/or receiving network-slice networking information, network-slice resource allocation information, network-slice report configuration/control information, network-slice resource-demand change information and/or a network-slice movement control parameter in the network-slice information from a core-network node and/or a network administration-and-management entity; and/or receiving, from a neighboring access-network node, the network-slice available resource information, the network-slice resource occupancy information, the network-slice interference-coordination information, and/or the network-slice movement control parameter in the network-slice information.

In a specific embodiment of the present disclosure, receiving the network-slice information is specifically: receiving network-slice information, from a core-network node, in the network-slice information through an interface establishment signaling, an access-network-node configuration updating signaling, a core-network-node configuration updating signaling, an information-reporting/reporting-configuration/reporting-control signaling, a Quality-of-Service information updating signaling, a network-slice configuration updating signaling, a user-related signaling or a session-related signaling between the access-network node and the core-network node, wherein specifically, in the 5G, the information may be received from an AMF (Access and Mobility Management Function) entity through a NG-establishing response signaling, a gNB-configuration updating confirmation signaling, an AMF configuration updating signaling, the user-related signaling, or the session-related signaling; and/or, receiving network-slice information, from a neighboring access-network node, in the network-slice information through a resource state signaling, an interface establishment signaling, an access-network-node configuration updating signaling, a dual-connection related signaling, a mobility modification signaling, a Quality-of-Service information updating signaling, a network-slice configuration updating signaling, a user-related signaling or a session-related signaling between access-network nodes, wherein specifically, in the 5G, the information may be received from the AMF entity through a NG-establishing response signaling, a gNB-configuration updating confirmation signaling, an AMF configuration updating signaling, the user-related signaling, or the session-related signaling.

In a specific embodiment of the present disclosure, the access-network node is a base station including a centralized unit (CU) and a distributed unit (DU). Receiving the network-slice information is specifically: receiving network-slice information from a core network by the centralized unit; and/or receiving network-slice information from a neighboring access-network node by the centralized unit; and/or receiving network-slice information from the network administration-and-management entity by the centralized unit and/or the distributed unit.

In a specific embodiment of the present disclosure, the method of processing the network slice further includes: sending, by the centralized unit to the distributed unit, at least one of following received by the centralized unit: network-slice quality-of-service information; network-slice protocol configuration information; system information dedicated to a network slice; network-slice identifier information; network-slice resource allocation information; network-slice report configuration/control information, wherein the centralized unit and the distributed unit transmit the network-slice information therebetween through an interface establishment signaling, a centralized-unit configuration updating signaling, a distributed-unit configuration updating signaling, an information-reporting /reporting-configuration /reporting-control signaling, a user-related signaling or a session-related signaling, wherein specifically, in the 5G, the information may be received from an AMF entity through a NG-establishing response signaling, a gNB-configuration updating confirmation signaling, an AMF configuration updating signaling, the user-related signaling, or the session-related signaling.

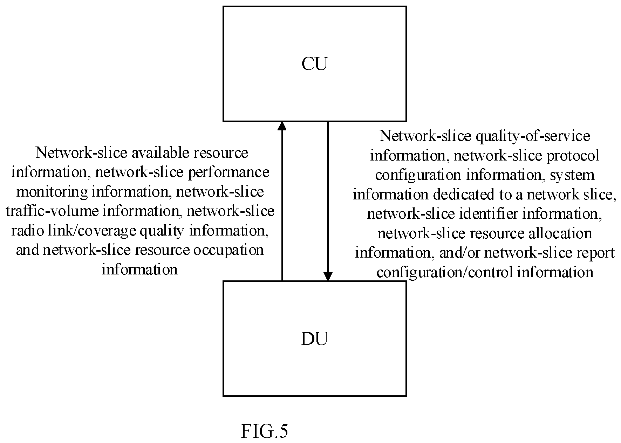

Specifically, as shown in FIG. 5, the CU transmits to the DU the network-slice quality-of-service information, network-slice protocol configuration information, system information dedicated to a network slice, network-slice identifier information, network-slice resource allocation information, and/or the network-slice report configuration/control information.

The DU transmits measurement reports and channel quality parameters for different users on each slice to the CU. At the same time, a utilization rate of slice resources transmitted to CU is mainly a utilization condition of physical resources of a slice.

In a specific embodiment of the present disclosure, receiving, by the distributed unit, network-slice information from the network administration-and-management entity, is specifically, receiving, by the distributed unit, at least one of following sent by the network administration-and-management entity: resource allocation information, network-slice networking information, network-slice report configuration.

In a specific embodiment of the present disclosure, the access-network node is a base station including a centralized unit (CU) and a distributed unit (DU);

The centralized unit includes a control-plane unit and a user-plane unit, and receiving the network-slice information specifically includes: receiving, by the control-plane unit, a portion, from a core-network node and/or a neighboring access-network node, of the network-slice information; and/or receiving, by the control-plane unit and/or the user-plane unit, a portion, from the network administration-and-management entity, of the network-slice information.

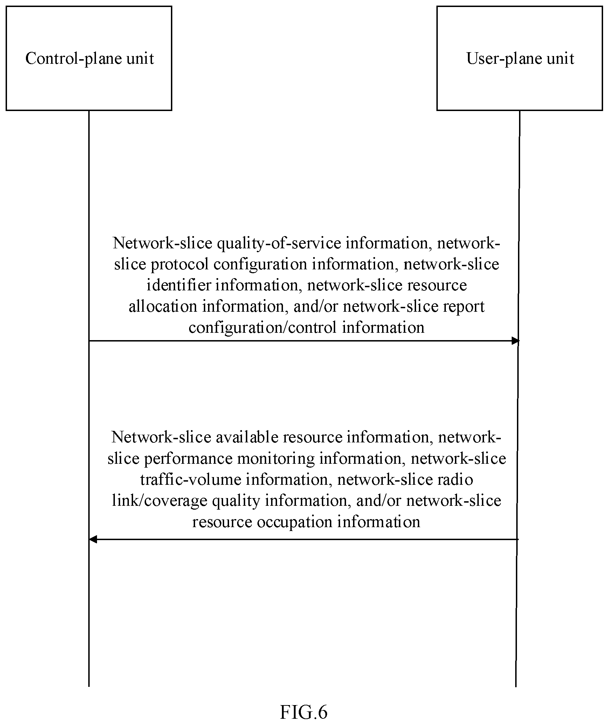

In a specific embodiment of the present disclosure, as shown in FIG. 6, the method of processing the network slice further includes: sending, by the control-plane unit to the user-plane unit, at least one of following received by the control-plane unit: network-slice quality-of-service information, network-slice protocol configuration information; network-slice identifier information; network-slice resource allocation information, network-slice report configuration/control information, wherein the user-plane unit receives network-slice resource allocation information, network-slice networking information, and/or network-slice report configuration/control information, in the network-slice information, from the network administration-and-management entity.

The control-plane unit and the user-plane unit transmit the network-slice information through an interface establishment signaling, a control-plane-unit configuration update signaling, a user-plane configuration updating signaling, an information-reporting/reporting-configuration/reporting-control signaling, a user-related signaling or a session-related signaling between the control-plane unit and the user-plane unit; specifically, in 5G, the information may be received through a Next-Generation (NG) establishment response signaling, a gNB configuration update confirmation signaling, an AMF configuration updating signaling, a user-related signaling, or a session-related signaling from the AMF.

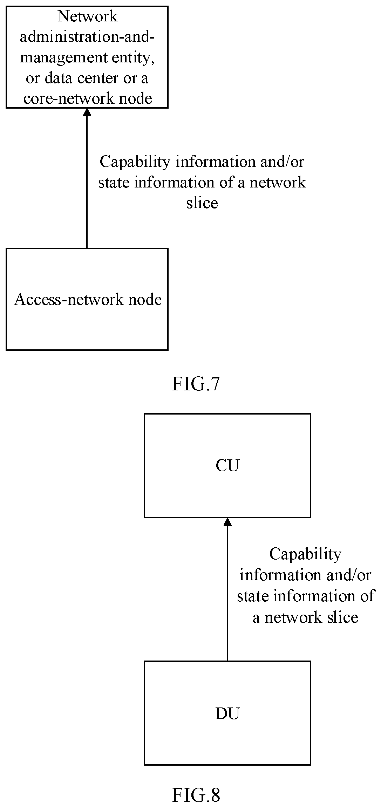

In a specific embodiment of the present disclosure, as shown in FIG. 7, the method of processing a network slice further includes reporting, by an access-network node, capability information and/or state information of the network slice.

In a specific embodiment of the present disclosure, the access-network node is a base station including a centralized unit and a distributed unit.

As shown in FIG. 8, reporting the capability information and/or state information of the network slice specifically includes: sending the capability information and/or state information of the network slice to the centralized unit by the distributed unit.

In a specific embodiment of the present disclosure, reporting the capability information and/or state information of the network slice further includes: receiving the capability information and/or state information of the network slice from the distributed unit by the centralized unit.

Reporting the capability information and/or state information of the network slice further includes reporting, by the centralized unit, the received capability information and/or state information of the network slice through a measurement reporting signaling.

The access-network node is a base station including a centralized unit and a distributed unit, and reporting the capability information and/or state information of the network slice further includes: reporting, by the distributed unit, the capability information and/or state information of the network slice through a measurement reporting signaling.

In a specific embodiment of the present disclosure, the access-network node is a base station including a centralized unit and a distributed unit; the centralized unit includes a control-plane unit and a user-plane unit, wherein reporting the capability information and/or state information of the network slice specifically includes sending the capability information and/or state information of the network slice to the control-plane unit by the user-plane unit.

In a specific embodiment of the present disclosure, the access-network node is a base station including a centralized unit and a distributed unit; the centralized unit includes a control-plane unit and a user-plane unit, wherein reporting the capability information and/or state information of the network slice further includes receiving the capability information and/or state information of the network slice from the user-plane unit by the control-plane unit.

Reporting the capability information and/or state information of the network slice herein further includes sending the capability information and/or state information by the user-plane unit through a measurement reporting signaling.

The state information includes at least one of following: network-slice available resource information, network-slice performance monitoring information, network-slice traffic-volume information, network-slice radio link/coverage quality information, and network-slice resource occupation information.

Reporting the capability information and/or state information of the network slice specifically is reporting, by the access-network node, the capability information and/or state information of the network slice to a core-network node, a neighboring access-network node and/or a network administration-and-management entity.

In a specific embodiment of the present disclosure, the network-slice information includes network-slice identifier information.

The technical solution of the present disclosure receives network-slice information through an access-network node, wherein the network-slice information includes at least one of: network-slice available (remaining) resource information, network-slice quality-of-service information, network-slice networking information, network-slice resource allocation information, network-slice access control information, network-slice report configuration/control information, network-slice resource-demand change information, network-slice resource occupation (load) information, network-slice interference-coordination information, network-slice movement control parameters. In this way, problems of awareness and interaction of slice information and slice-related decision-making and distribution at a Radio Access Network (RAN) side are addressed, management of a network slice can be carried out.

An embodiment of the present disclosure further provides an access-network node, the access-network node is configured to receive network-slice information. The network-slice information includes at least one of following: network-slice Quality-of-Service (QoS) information; network-slice networking information; network-slice resource allocation information; network-slice access control information; network-slice report configuration/control information; network-slice resource-demand change information; network-slice resource occupation information; network-slice interference-coordination information; a network-slice movement control parameter.

The network-slice available resource information includes at least one of following: a remaining resource available to a network slice and remaining number of users admissible by the network slice; or the network-slice quality-of-service information includes at least one of following: a network-slice resource type, a network slice priority, a network-slice delay budget, a network-slice packet-error-rate index, a network-slice aggregated bit rate, a network-slice guaranteed bit rate, a network-slice averaging window size, the number of users admissible by a network slice, the number of users admissible by a network slice, a network-slice allocation reservation priority (ARP), a network-slice reflection quality-of-service indication (RQI), network-slice notification control information; or the network-slice networking information includes at least one of following: network-slice configuration information, network-slice activation information, and network-slice deactivation information; or the network-slice resource allocation information includes at least one of following: the number of network slice resources, a proportion of network slice resources, network-slice guaranteed resources, network-slice aggregated resources, network-slice resource-sharing threshold, wherein the resources herein include at least one of following resources: a radio network resource, a computing resource, and a storage resource; or the network-slice report configuration/control information includes at least one of following: a network-slice reporting parameter and a parameter reporting time/occasion, and the network-slice reporting parameter includes at least one of following parameters: a network-slice resource occupation parameter and a network-slice performance monitoring parameter.

The network-slice user information includes at least one of following: location change information of a user of a network slice, service-type change information of a user of a network slice, and traffic-volume change information of a user of a network slice; or the network-slice service information includes at least one of following: network-slice service-type change information, network-slice traffic-volume change information, and network-slice user-amount change information; or the network-slice resource-demand change information includes network-slice resource-occupancy change information; or the network-slice movement control parameter includes at least one of following: a slice cell-reselection parameter and a slice mobility parameter.

The access-network node is specifically configured for receiving the network-slice information from a core-network node, an access-network node, and/or a network administration-and-management entity.

The access-network node is a base station including a centralized unit and a distributed unit. Receiving the network-slice information specifically includes: receiving the network-slice information from a core network by the centralized unit; and/or receiving the network-slice information from a neighboring access-network node by the centralized unit; and/or receiving the network-slice information from the network administration-and-management entity by the centralized unit and/or the distributed unit.

The access-network node is a base station including a centralized unit and a distributed unit. The centralized unit includes a control-plane unit and a user-plane unit, and receiving the network-slice information specifically includes: receiving, by the control-plane unit, a portion, from a core-network node and/or a neighboring access-network node, of the network-slice information; and/or receiving, by the control-plane unit and/or the user-plane unit, a portion, from the network administration-and-management entity, of the network-slice information.

The access-network node is further configured for reporting capability information and/or state information of the network slice.

It should be noted that the access-network node is a device corresponding to the method of processing the network-slice information performed by the access-network node, and all embodiments of the method are applicable to the embodiment of the device and the same technical effects can be achieved.

An embodiment of the present disclosure further provides a method of processing network-slice information. The method is used for base stations including a centralized unit and a distributed unit. The processing method includes: sending, by the centralized unit to the distributed unit, network-slice quality-of-service information, network-slice protocol configuration information, system information dedicated to a network slice, network-slice identifier information, network-slice resource allocation information, and/or network-slice report configuration/control information, wherein the centralized unit and the distributed unit transmit the network-slice information therebetween through an interface establishment signaling, a centralized-unit configuration updating signaling, a distributed-unit configuration updating signaling, an information-reporting /reporting-configuration /reporting-control signaling, a user-related signaling or a session-related signaling.

An embodiment of the present disclosure further provides a method of processing network-slice information. The method is used for a base station including a control-plan unit and a user-plane unit, where the base station is a base station including a centralized unit and a distributed unit, wherein the centralized unit includes the control-plane unit and the user-plane unit, and the processing method includes: sending at least one of following by the control-plane unit to the user-plane unit: network-slice quality-of-service information, network-slice protocol configuration information, network-slice identifier information, network-slice resource allocation information, network-slice report configuration/control information.

The control-plane unit and the user-plane unit transmit the network-slice information through an interface establishment signaling, a control-plane-unit configuration update signaling, a user-plane configuration updating signaling, an information-reporting/reporting-configuration/reporting-control signaling, a user-related signaling or a session-related signaling between the control-plane unit and the user-plane unit.

An embodiment of the present disclosure further provides base stations including a centralized unit and a distributed unit. The centralized unit is specifically configured for sending network-slice quality-of-service information, network-slice protocol configuration information, system information dedicated to a network slice, network-slice identifier information, network-slice resource allocation information, and/or network-slice report configuration/control information to the distributed unit.

The centralized unit and the distributed unit transmit the network-slice information through an interface establishment signaling, a centralized-unit configuration update signaling, a distributed-unit configuration updating signaling, an information-reporting/reporting-configuration/reporting-control signaling, a user-related signaling or a session-related signaling.

In a specific embodiment of the present disclosure, the network-slice information include network-slice identifier information.

An embodiment of the present disclosure further provide base stations including a control-plane unit and a user-plane unit, where the base stations are base stations including a centralized unit and a distributed unit, wherein the centralized unit includes a control-plane unit and a user-plane unit, the control-plane unit is specifically configured for sending at least one of following to the user-plane unit: network-slice quality-of-service information, network-slice protocol configuration information, network-slice identifier information, network-slice resource allocation information, network-slice report configuration/control information.

The control-plane unit and the user-plane unit transmit the network-slice information through an interface establishment signaling, a control-plane-unit configuration update signaling, a user-plane configuration updating signaling, an information-reporting/reporting-configuration/reporting-control signaling, a user-related signaling or a session-related signaling between the control-plane unit and the user-plane unit.

Specific implementation of the above technical solutions will be described below in conjunction with detailed flows.

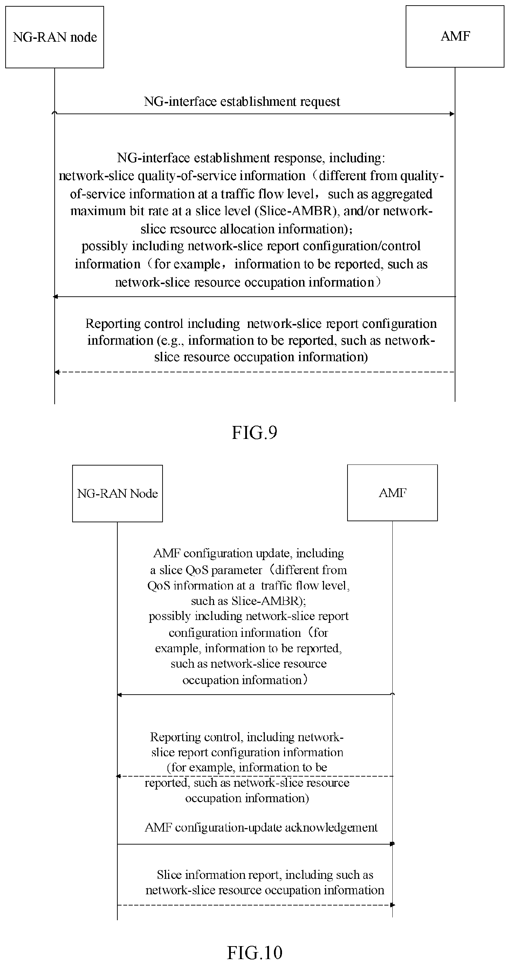

In a specific embodiment of the present disclosure, as shown in FIG. 9, the method of processing the network slice further includes: initiating, by a 5G access-network node (NG-RAN node) initiates a NG-interface establishment request to an 5G core-network node AMF (Access and Mobility Management Function entity); sending by the AMF, an NG-interface establishment response to the access-network node, wherein the response includes network-slice quality-of-service information and/or network-slice resource allocation information, and may also include network-slice report configuration/control information; sending, by the AMF, a reporting-control to the access-network node, wherein the reporting-control includes network-slice report configuration information (e.g., information to be reported, such as network-slice resource occupation information).

In this embodiment, the 5G core-network node AMF (Access and Mobility Management Function entity) sends a part or all of following to the 5G access-network node (the NG-RAN node including gNB, ng-eNB, etc.) through the NG-interface establishment response message: 1) network-slice quality-of-service information: a) for example, a resource type of a network slice, such as if a QoS flow feature of a QoS Flow carried in the resource type, then the access network may make an auxiliary judgement on an admission control based on a mapping rule between a QoS flow and a DRB; b) for example, a network slice priority, when configuring a data radio bearer (DRB) of a slice-related session, the 5G access-network node will consider configuring a higher MAC scheduling priority-level for a bearer corresponding to a high-priority-level network slice, or when considering an inter-slice resource exchange, a 5G access-network node will provide a high-priority-level slice with a higher resource-sharing right; c) for example, a network-slice delay budget, which enables a 5G access-network node to make a decision on processes of network-slice protocol configuration and network-slice processing, including, but not limited to, configuration of a physical-layer TTI and the like, and further, in an architecture in which CU and DU are separated and CP and UP are separated, a 5G access-network node can select appropriate DU and UP nodes; d) for example, a network-slice packet-error-rate index of a network slice; if a requirement on the packet-error-rate index is low, the 5G access-network node can reduce a packet transmission delay by reducing retransmission and queuing; e) for example, a maximum transmission rate of a network slice, such as an aggregated maximum bit rate at a network-slice level, the 5G access-network node can perform admission control, flow control and scheduling control of a user/service of a network slice based on received maximum bit-rate information; f) for example, a network slice guarantee rate, which enable a 5G access network to ensure that each slice meets a basic traffic-volume demand in case of resource conflict through certain an isolation protection means, an admission control means; g) a smooth window of a network slice, which is used to assist a calculation of a maximum rate and a guaranteed rate of a network slice and is a period of a related calculation, and is used to ensure a quality monitoring of a network slice at different time granularities; the smaller the smooth window is, the finer the quality monitoring is; h) the number of users that a network slice can admit, wherein a 5G access network is required to meet a requirement of the basic user amount on each slice through certain isolation protection and admission control means in case of resource conflict; i) the number of users allowed to be admitted by a network slice, which requires a 5G access network to control the number of subscribers of each slice to be within the maximum number of subscribers configured for the network slice, through certain admission control means; j) an allocation and retention priority (ARP) of a network slice, including a pre-emption capability and a pre-emption vulnerability indicator, wherein the stronger the pre-emption capability is, the more important a current service request is, and the more likely resources of other low-priority-level services are seized for use by the current service request, when resources are limited; and the more vulnerable the pre-emption vulnerability indicator is, the more likely resources used by the current service request is seized by a new service having a high priority level, and thus transferring ARP information of a network slice enables an access network to decide service admission of a network slice and a resource transfer of a network slice according to priority of a slice service; 1) a reflection quality-of-service indicator (RQI) of a network slice, which is a parameter at a slice level, the value of the RQI is 0 or 1; when the indicator is 1, it indicates that all QoS traffic flows of all users of the slice adopt quality-of-service reflection; information from a core network, i.e., mapping of an uplink IP traffic flow to a QoS traffic flow, is determined by referring to a mapping mode of a same downlink IP traffic flow; the access network may make a decision on whether mapping of an uplink QoS traffic flow to a DRB (Data Radio Bearer) is determined by referring to a mapping mode of the same downlink QoS traffic flow, that is, whether the access network also adopts the quality-of-service reflection mode; m) network-slice notification control information, which indicates that for a specific session of a network slice, if an access network is incapable of meeting a demand of the session, incapability of the access network needs to be fed back to a core network, and if a capability of the access network is recovered, the core network is informed of this capability again, wherein the notification control information at a slice level herein describes that for any session or any traffic flow inside the network slice, if the access network is incapable of meeting the demand of a corresponding service, then the core network needs to be informed of the incapability, and if the capability of the access network is recovered, the core network is informed of this capability recover information, so that the core network may re-consider a service connection; 2) network-slice resource allocation information: the network-slice resource allocation information enables the access network to perform isolation of different physical resources, differentiating configurations and scheduling policies according to different needs of slices; 3) network-slice report configuration/control information: a) for example, the core network may want to know available network resource information at an access network side, such as whether a current corresponding network slice has available resources, so that the core network decides slice selection for a corresponding user, and the like; therefore, the core network needs to configure information reported from the access network and an occasion of reporting the information, for example, an occasion when the access network finds that the number of resources of a corresponding slice is less than a certain threshold, the access network needs to report information of limited resources to the core network so that the core network can perform adjustment of a slice selection policy.

The report configuration/control information of the network slice may be carried by an independent reporting signaling, but may be transmitted along with an AMF configuration.

In a specific embodiment of the present disclosure, as shown in FIG. 10, the method of processing a network slice further includes: sending, by the AMF, an AMF configuration update message to the access-network node, wherein the AMF configuration update message includes network-slice quality-of-service information, and possibly further includes network-slice report configuration information; sending, by the AMF, a reporting-control message to the access-network node, wherein, the reporting-control message includes the network-slice report configuration information (for example, information to be reported, such as network-slice resource occupation information); sending an AMF configuration-update acknowledgement to the AMF by the access-network node; sending a slice information report to the AMF by the access-network node, wherein the slice information report includes network-slice resource occupation information.

In this embodiment of the present disclosure, the 5G core-network node, AMF (Access and Mobility Management Function) entity, sends a part or all of the following to the 5G access-network node (NG-RAN node, including gNB, ng-eNB and the like) through the AMF configuration-update message: 1) network-slice quality-of-service information: a) for example, a resource type of a network slice, such as if a QoS flow feature of a QoS Flow carried in the resource type, then the access network may make an auxiliary judgement on an admission control based on a mapping rule between a QoS flow and a DRB; b) for example, a network slice priority, when configuring a data radio bearer (DRB) of a slice-related session, the 5G access-network node will consider configuring a higher MAC scheduling priority-level for a bearer corresponding to a high-priority-level network slice, or when considering an inter-slice resource exchange, a 5G access-network node will provide a high-priority-level slice with a higher resource-sharing right; c) for example, a network-slice delay budget, which enables a 5G access-network node to make a decision on processes of network-slice protocol configuration and network-slice processing, including, but not limited to, configuration of a physical-layer TTI and the like, and further, in an architecture in which CU and DU are separated and CP and UP are separated, a 5G access-network node can select appropriate DU and UP nodes; d) for example, a network-slice packet-error-rate index of a network slice; if a requirement on the packet-error-rate index is low, the 5G access-network node can reduce a packet transmission delay by reducing retransmission and queuing; e) for example, a maximum transmission rate of a network slice, such as an aggregated maximum bit rate at a network-slice level, the 5G access-network node can perform admission control, flow control and scheduling control of a user/service of a network slice based on received maximum bit-rate information; f) for example, a network slice guarantee rate, which enable a 5G access network to ensure that each slice meets a basic traffic-volume demand in case of resource conflict through certain an isolation protection means, an admission control means; g) a smooth window of a network slice, which is used to assist a calculation of a maximum rate and a guaranteed rate of a network slice and is a period of a related calculation, and is used to ensure a quality monitoring of a network slice at different time granularities; the smaller the smooth window is, the finer the quality monitoring is; h) the number of users that a network slice can admit, wherein a 5G access network is required to meet a requirement of the basic user amount on each slice through certain isolation protection and admission control means in case of resource conflict; i) the number of users allowed to be admitted by a network slice, which requires a 5G access network to control the number of subscribers of each slice to be within the maximum number of subscribers configured for the network slice, through certain admission control means; j) an allocation and retention priority (ARP) of a network slice, including a pre-emption capability and a pre-emption vulnerability indicator, wherein the stronger the pre-emption capability is, the more important a current service request is, and the more likely resources of other low-priority-level services are seized for use by the current service request, when resources are limited; and the more vulnerable the pre-emption vulnerability indicator is, the more likely resources used by the current service request is seized by a new service having a high priority level, and thus transferring ARP information of a network slice enables an access network to decide service admission of a network slice and a resource transfer of a network slice according to priority of a slice service; 1) a reflection quality-of-service indicator (RQI) of a network slice, which is a parameter at a slice level, the value of the RQI is 0 or 1; when the indicator is 1, it indicates that all QoS traffic flows of all users of the slice adopt quality-of-service reflection; information from a core network, i.e., mapping of an uplink IP traffic flow to a QoS traffic flow, is determined by referring to a mapping mode of a same downlink IP traffic flow; the access network may make a decision on whether mapping of an uplink QoS traffic flow to a DRB (Data Radio Bearer) is determined by referring to a mapping mode of the same downlink QoS traffic flow, that is, whether the access network also adopts the quality-of-service reflection mode; m) network-slice notification control information, which indicates that for a specific session of a network slice, if an access network is incapable of meeting a demand of the session, incapability of the access network needs to be fed back to a core network, and if a capability of the access network is recovered, the core network is informed of this capability again, wherein the notification control information at a slice level herein describes that for any session or any traffic flow inside the network slice, if the access network is incapable of meeting the demand of a corresponding service, then the core network needs to be informed of the incapability, and if the capability of the access network is recovered, the core network is informed of this capability recover information, so that the core network may re-consider a service connection; 2) network-slice resource allocation information: the network-slice resource allocation information enables the access network to perform isolation of different physical resources, differentiating configurations and scheduling policies according to different needs of slices; 3) network-slice report configuration/control information: a) for example, the core network may want to know available network resource information at an access network side, such as whether a current corresponding network slice has available resources, so that the core network decides slice selection for a corresponding user, and the like; therefore, the core network needs to configure information reported from the access network and an occasion of reporting the information, for example, an occasion when the access network finds that the number of resources of a corresponding slice is less than a certain threshold, the access network needs to report information of limited resources to the core network so that the core network can perform adjustment of a slice selection policy.

The report configuration/control information of the network slice may be carried by an independent reporting signaling, but may be transmitted along with the AMF configuration.

The AMF configuration-update confirmation message confirms the AMF configuration-update message, including confirmation of a network-slice information update.

In addition, it is also not excluded that the network-slice information is transferred by a QoS-specific signaling of a network slice.

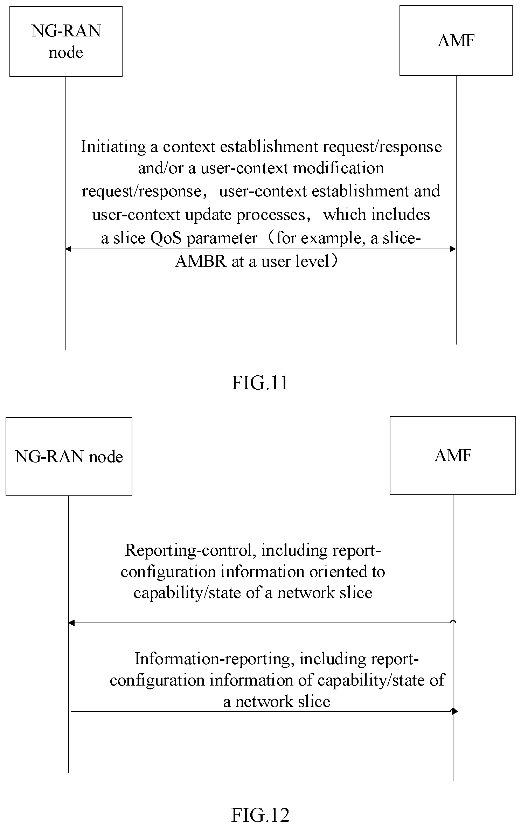

In a specific embodiment of the present disclosure, as shown in FIG. 11, the method of processing the network slice further includes: sending a user-context establishment message and a user-context update message by the AMF to the access-network node, wherein the user-context establishment message and the user-context update message include a network-slice quality-of-service parameter.

In this embodiment, the 5G core-network node, AMF (Access and Mobility Management Function) entity sends a part or all of following information to the 5G access-network node (NG-RAN node, including gNB, ng-eNB, and the like) through a user-context-management procedure signaling, such as an initial context establishment request, a user-context modification request: 1) network-slice quality-of-service information, wherein a definition of this information is different from the network-slice information in FIG. 10; the network-slice information of FIG. 10 is applied to management of a network slice at a site, the network slice at the site contains a plurality of data sessions for a plurality of users, whereas control of FIG. 11 is directed to a management index of various slices of a user; briefly, FIG. 10 is a slice QoS plan at a site level, FIG. 11 is a slice QoS plan at a user level, and the method of FIG. 11 can make differential designs among users in a slice, and can coordinate resource configuration of multiple slices corresponding to a single user; 2) a slice QoS application at a user level, which is basically similar to that at a site level, except that an index corresponding to the application is applied to various users only: a) for example, a resource type of a network slice, such as if a QoS flow feature of a QoS Flow carried in the resource type, then the access network may make an auxiliary judgement on an admission control based on a mapping rule between a QoS flow and a DRB; b) for example, a network slice priority, when configuring a data radio bearer (DRB) of a slice-related session, the 5G access-network node will consider configuring a higher MAC scheduling priority-level for a bearer corresponding to a high-priority-level network slice, or when considering an inter-slice resource exchange, a 5G access-network node will provide a high-priority-level slice with a higher resource-sharing right; c) for example, a network-slice delay budget, which enables a 5G access-network node to make a decision on processes of network-slice protocol configuration and network-slice processing, including, but not limited to, configuration of a physical-layer TTI and the like, and further, in an architecture in which CU and DU are separated and CP and UP are separated, a 5G access-network node can select appropriate DU and UP nodes; d) for example, a network-slice packet-error-rate index of a network slice; if a requirement on the packet-error-rate index is low, the 5G access-network node can reduce a packet transmission delay by reducing retransmission and queuing; e) for example, a maximum transmission rate of a network slice, such as an aggregated maximum bit rate at a network-slice level, the 5G access-network node can perform admission control, flow control and scheduling control of a user/service of a network slice based on received maximum bit-rate information; f) for example, a network slice guarantee rate, which enable a 5G access network to ensure that each slice meets a basic traffic-volume demand in case of resource conflict through certain an isolation protection means, an admission control means; g) a smooth window of a network slice, which is used to assist a calculation of a maximum rate and a guaranteed rate of a network slice and is a period of a related calculation, and is used to ensure a quality monitoring of a network slice at different time granularities; the smaller the smooth window is, the finer the quality monitoring is; h) an allocation and retention priority (ARP) of a network slice, including a pre-emption capability and a pre-emption vulnerability indicator, wherein the stronger the pre-emption capability is, the more important a current service request is, and the more likely resources of other low-priority-level services are seized for use by the current service request, when resources are limited; and the more vulnerable the pre-emption vulnerability indicator is, the more likely resources used by the current service request is seized by a new service having a high priority level, and thus transferring ARP information of a network slice enables an access network to decide service admission of a network slice and a resource transfer of a network slice according to priority of a slice service; i) a reflection quality-of-service indicator (RQI) of a network slice, which is a parameter at a slice level, the value of the RQI is 0 or 1; when the indicator is 1, it indicates that all QoS traffic flows of the user adopt quality-of-service reflection; information from a core network, i.e., mapping of an uplink IP traffic flow to a QoS traffic flow, is determined by referring to a mapping mode of a same downlink IP traffic flow; the access network may make a decision on whether mapping of an uplink QoS traffic flow to a DRB (Data Radio Bearer) is determined by referring to a mapping mode of the same downlink QoS traffic flow, that is, whether the access network also adopts the quality-of-service reflection mode; j) network-slice notification control information, which indicates that for a specific session of a network slice, if an access network is incapable of meeting a demand of the session, incapability of the access network needs to be fed back to a core network, and if a capability of the access network is recovered, the core network is informed of this capability again, wherein the notification control information at a slice level herein describes that for any session or any traffic flow inside the network slice, if the access network is incapable of meeting the demand of a corresponding service, then the core network needs to be informed of the incapability, and if the capability of the access network is recovered, the core network is informed of this capability recover information, so that the core network may re-consider a service connection.

Difference therebetween is that a slice QoS at a user level does not include the number of users that a network slice can admit or the number of users allowed to be admitted by a network slice.

In addition, it is also possible to provide a comprehensive indicator requirement of multiple QoS flows of a current session according to a session requirement of a user through a session-related process.

In a specific embodiment of the present disclosure, as shown in FIG. 12, the method of processing a network slice further includes: sending a reporting-control message to the access-network node by the AMF, wherein the reporting-control message includes report-configuration information oriented to a capability/state of a network slice; and feeding back an information-reporting message to the AMF by the access-network node, wherein the information-reporting message includes report-configuration information of the capability/state of the network slice.

In this embodiment, the 5G core-network node, the AMF (Access and Mobility Management Function) entity, sends following information to the 5G access-network node (NG-RAN node, including gNB and ng-eNB) through a reporting-control signaling: network-slice report configuration/control information: a) for example, the core network may want to know available network resource information at an access network side, such as whether a current corresponding network slice has available resources, so that the core network decides slice selection for a corresponding user, and the like; therefore, the core network needs to configure information reported from the access network and an occasion of reporting the information, for example, an occasion when the access network finds that the number of resources of a corresponding slice is less than a certain threshold, the access network needs to report information of limited resources to the core network so that the core network can perform adjustment of a slice selection policy.

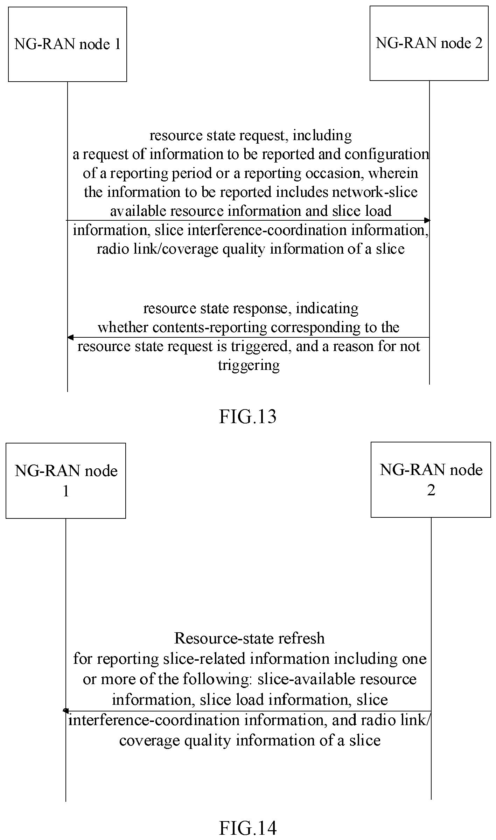

In a specific embodiment of the present disclosure, as shown in FIG. 13, the method of processing the network slice further includes: initiating a resource state request to a second access-network node by a first access-network node, wherein the resource state request includes a request of information to be reported and configuration of a reporting period or a reporting occasion, wherein the information to be reported includes network-slice available resource information and slice load information, slice interference-coordination information, radio link/coverage quality information of a slice; sending a resource state response to the first access-network node by the second access-network node, wherein the resource state response indicates whether contents-reporting corresponding to the resource state request is triggered, and a reason for not being triggered.

In this embodiment, a 5G access-network node, a NG-RAN node 1, sends a request to another 5G access-network node, NG-RAN node 2, through a resource state request, wherein the request requests one or more of slice-available resource information, slice-load information, slice interference-coordination information, quality information of a slice radio link/coverage to be reported, and may include configuration of a period/an occasion of reporting the information. The access-network node, NG-RAN node 2, sends a resource state response to the access-network node, NG-RAN node1, to feed back whether or not the information requested in the request triggers a statistical reporting and the reason for not being triggered the statistical reporting.

In a specific embodiment of the present disclosure, as shown in FIG. 14, the method of processing the network slice further includes: sending a resource-state refresh message to the first access-network node by the second access-network node to report slice-related information, wherein the slice-related information includes one or more of the following: slice-available resource information, slice load information, slice interference-coordination information, and radio link/coverage quality information of a slice.

In this embodiment, a 5G access-network node, NG-RAN node 2, reports the slice-related information to another 5G access-network node, NG-RAN node 1, through the resource-state update message, wherein, the slice-related information one or more of the following: slice-available resource information, slice load information, slice interference-coordination information, and radio link/coverage quality information of a slice. The access-network node, NG-RAN node 1, may, based on the received slice-available resource information, select an appropriate target site when selecting a target site for handover of a mobile user or when selecting a dual-connection target site or a multi-connection target site serving a user, with availability of a slice resource and a signaling quality of a site being considered. The access-network node, NG-RAN node 1, may, based on the received slice load information, select an appropriate target site when selecting a target site for handover of a mobile user or when selecting a dual-connection target site or a multi-connection target site serving a user, with a load-balancing requirement being considered. The access-network node, NG-RAN node 1, may perform resource-scheduling based on the received slice interference-coordination information. The access-network node, NG-RAN node 1, may, based on the received radio link/coverage quality information of a slice, select a target site, select a multi-connection site, and possibly perform slice re-planning.

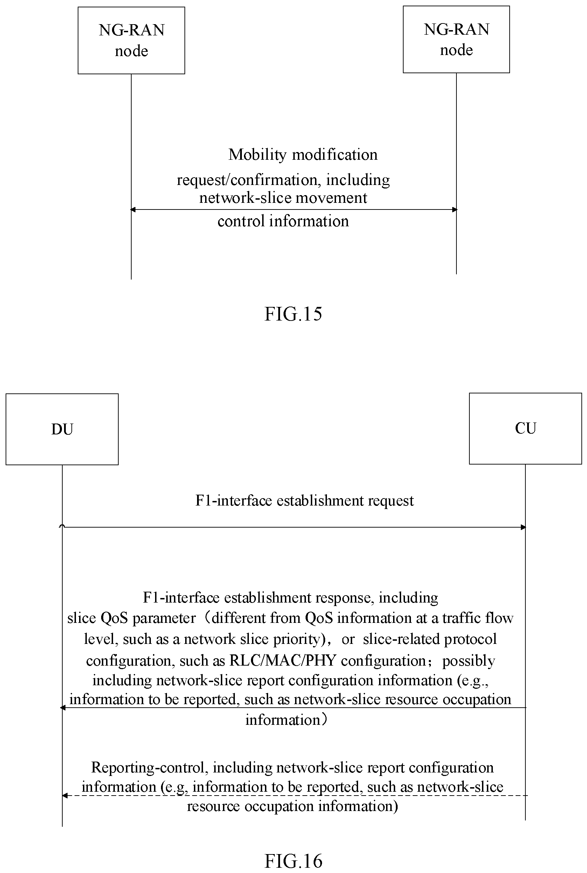

In a specific embodiment of the present disclosure, as shown in FIG. 15, the method of processing the network slice further includes: sending, by the first access-network node, a mobility modification request to the second access-network node; sending, by the second access-network node, a mobility modification confirmation to the first access-network node, wherein, the mobility modification confirmation includes: network-slice movement control information.

In this embodiment, a 5G access-network node, NG-RAN node 1, sends a mobility-parameter adjustment request to another 5G access-network node, NG-RAN node 2, through a mobility modification request message, wherein the request may include a handover trigger parameter, a movement reselection parameter.

After the NG-RAN node 2 receives the message from the NG-RAN node 1, the NG-RAN node 2 determines whether to accept the parameter adjustment and feeds back a mobility-parameter adjustment response to the NG-RAN node 1. If the NG-RAN node 2 receives and accepts the request message, the parameters about mobility are saved, and the parameters about mobility are used in subsequently triggering a user-movement process, with possibly informing a user of adjustment of the corresponding parameters about mobility.

In a specific embodiment of the present disclosure, as shown in FIG. 16, the method of processing the network slice further includes: sending an F1-interface establishment request to the CU by the DU; sending a F1-interface establishment response to the DU by the CU, wherein the F1-interface establishment response includes network-slice quality-of-service information or slice-related protocol configuration information, and possibly includes network-slice report configuration information; sending the reporting-control to the DU by the CU, wherein the reporting-control includes network-slice report configuration information.

In this embodiment, the CU sends some or all of the following information to the DU through the F1-interface establishment response message: 1) network-slice quality-of-service information: a) for example, a resource type of a network slice, such as if a QoS flow feature of a QoS Flow carried in the resource type, then the access network may make an auxiliary judgement on a configuration of the DU based on a mapping rule between a QoS flow and a DRB; b) for example, a network slice priority, when configuring a data radio bearer (DRB) of a slice-related session, the DU will consider configuring a higher MAC scheduling priority-level for a bearer corresponding to a high-priority-level network slice, or when considering an inter-slice resource exchange, the DU will provide a high-priority-level slice with a higher resource-sharing right; c) for example, a network-slice delay budget, which enables the DU to make a decision on processes of L1/2 protocol configuration and processing of a network slice, including, but not limited to, configuration of a physical-layer TTI and the like; d) for example, a network-slice packet-error-rate index of a network slice; if a requirement on the packet-error-rate index is low, the 5G access-network node can reduce a packet transmission delay by reducing retransmission and queuing; e) a reflection quality-of-service indicator (RQI) of a network slice, which is a parameter at a slice level, the value of the RQI is 0 or 1; when the indicator is 1, it indicates that all QoS traffic flows of all users of the slice adopt quality-of-service reflection; the access network may make a decision on whether mapping of an uplink QoS traffic flow to a DRB (Data Radio Bearer) is determined by referring to a mapping mode of the same downlink QoS traffic flow, that is, whether the access network also adopts the quality-of-service reflection mode; f) network-slice notification control information, which indicates that for a specific session of a network slice, if the DU is incapable of meeting a demand of the session, incapability of the DU needs to be fed back to a CU, and if a capability of the DU is recovered, the CU is informed of this capability again, wherein the notification control information at a slice level herein describes that for any session or any traffic flow inside the network slice, if the DU is incapable of meeting the demand of a corresponding service, then the CU needs to be informed of the incapability, and if the capability of the DU is recovered, the CU is informed of this capability recover information, so that the CU may re-consider a service connection; 2) slice-related protocol configuration, wherein the CU knows QoS information of a slice, and maps the QoS information to a protocol configuration of the DU, such as a high-priority-level slice is configured with a scheduling weighting at a MAC; and the DU, if the information is received, may adjust a scheduling policy for various slices; 3) network-slice report configuration/control information, wherein for example, the CU may want to know information of available network resources at a DU side, such as whether a current corresponding network slice has available resource so as to determine a DU selection for a corresponding user; thus, the CU needs to configure information reported by the DU and an occasion of reporting such information; for example, an occasion when the DU finds that the number of resources of a corresponding slice is less than a certain threshold, the DU needs to report information of limited resources to the CU so that the CU can perform adjustment of a slice selection policy of a DU.

The network-slice report configuration/control information may be carried by an independent reporting signaling, such as a signaling related to measurement reporting, however, may also be transferred together with an F1-interface establishment response.

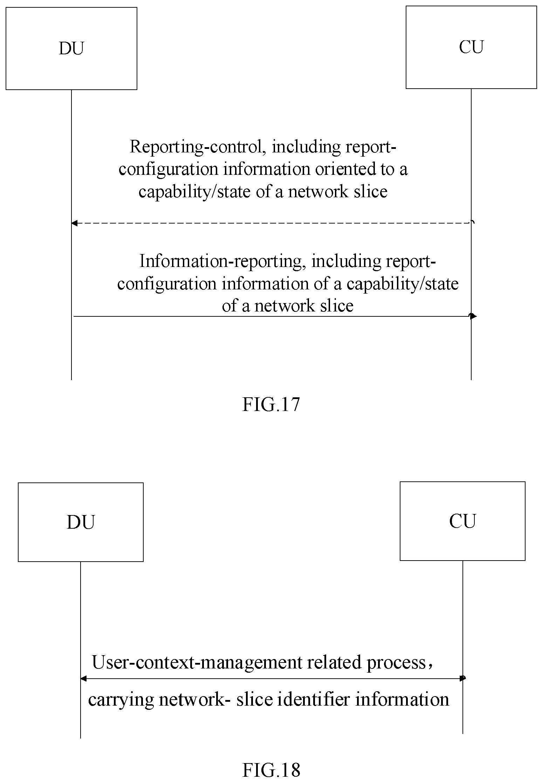

In a specific embodiment of the present disclosure, as shown in FIG. 17, the method of processing the network slice further includes: sending a reporting-control to DU by CU, wherein the reporting-control includes reporting configuration information oriented to capability/state of a network slice; sending information-reporting to CU by DU, wherein the information-reporting includes reporting configuration information of capability/state of a network slice.

In this embodiment, the DU sends the following information to the CU by a reporting-control signaling including a measurement-reporting signaling: 1) capability and state information of a network slice of an access network, such as slice network resource information available at the DU side, wherein specifically, for example, the information is whether the current corresponding network slice has available resources to determine a DU selection for a user of a slice, etc.; for example, if the DU finds that the number of corresponding slice resources is less than a certain threshold, then the DU reports information of limited slice resources to the CU, so that the CU can perform adjustment of a DU selection policy for a slice.

The reporting information and the reporting occasion/period may be configured in advance by the CU through a reporting-control signaling.

In a specific embodiment of the present disclosure, as shown in FIG. 18, the method of processing a network slice further includes: initiating a user-context management process signaling to the CU by the DU; and sending network-slice identifier information to the DU by the CU.

In this embodiment, the CU sends some or all of the following information to the DU through a user-context management process signaling mainly including the user-context establishment request signaling, the user-context modification request signaling: 1) network-slice quality-of-service information, wherein a definition of this information is different from the network-slice information in FIG. 16; the network-slice information of FIG. 16 is applied to management of a network slice at a site, the network slice at the site contains a plurality of data sessions for a plurality of users, whereas control of FIG. 18 is directed to a management index of various slices of a user; briefly, FIG. 16 is a slice QoS plan at a site level, FIG. 18 is a slice QoS plan at a user level, and the method of FIG. 18 can make differential designs among users in a slice, and can coordinate resource configuration of multiple slices corresponding to a single user; a slice QoS application at a user level is basically similar to that at a site level, except that an index corresponding to the application is applied to various users only; 2) network-slice quality-of-service information: a) for example, a resource type of a network slice, such as if a QoS flow feature of a QoS Flow carried in the resource type, then the access network may make an auxiliary judgement on configuration of various slices of the user at the DU based on a mapping rule between a QoS flow and a DRB; b) for example, a network slice priority, when configuring a data radio bearer (DRB) of a slice-related session, the DU will consider configuring a higher MAC scheduling priority-level for a bearer corresponding to a high-priority-level network slice of the UE, or when considering an inter-slice resource exchange, the DU will provide a high-priority-level slice of the UE with a higher resource-sharing right; c) for example, a network-slice delay budget, which enables the DU to make a decision on processes of L1/2 protocol configuration and processing of a network slice, including, but not limited to, configuration of a physical-layer TTI and the like; d) for example, a network-slice packet-error-rate index of a network slice; if a requirement on the packet-error-rate index is low, the DU can reduce a packet transmission delay by reducing retransmission and queuing; e) a reflection quality-of-service indicator (RQI) of a network slice, which is a parameter at a slice level, the value of the RQI is 0 or 1; when the indicator is 1, it indicates that all QoS traffic flows of the user adopt quality-of-service reflection; information from CN, i.e., mapping of an uplink IP traffic flow to a QoS traffic flow, is determined by referring to a mapping mode of a same downlink IP traffic flow; CN may make a decision on whether mapping of an uplink QoS traffic flow to a DRB (Data Radio Bearer) is determined by referring to a mapping mode of the same downlink QoS traffic flow, that is, whether the CN also adopts the quality-of-service reflection mode; f) network-slice notification control information, which indicates that for a specific session of a network slice, if the DU is incapable of meeting a demand of the session, incapability of the DU needs to be fed back to the CU, and if a capability of the DU is recovered, the CU is informed of this capability again, wherein the notification control information at a slice level herein describes any session or any traffic flow inside the network slice corresponding to the user, and if the DU is incapable of meeting the demand of a corresponding service, then the CU needs to be informed of the incapability, and if the capability of the DU is recovered, the CU is informed of this capability recover information, so that the CJU may re-consider a service connection; 3) slice-related protocol configuration, wherein the CU knows QoS information of a slice, and maps the QoS information to a protocol configuration of the DU, such as a high-priority-level slice is configured with a scheduling weighting at a MAC; and the DU, if the information is received, may adjust a scheduling policy for various slices; 4) network-slice report configuration/control information, wherein for example, the CU may want to know information of available network resources at a DU side, such as whether a current corresponding network slice has available resource so as to determine a DU selection for a corresponding user; thus, the CU needs to configure information reported by the DU and an occasion of reporting such information; for example, an occasion when the DU finds that the number of resources of a corresponding slice is less than a certain threshold, the DU needs to report information of limited resources to the CU so that the CU can perform adjustment of a slice selection policy of a DU.

In addition, by mean of a user-related signaling, quality-of-service information at a session level may also be provided, which provides a comprehensive indicator requirement of multiple QoS flows of the current slice session.

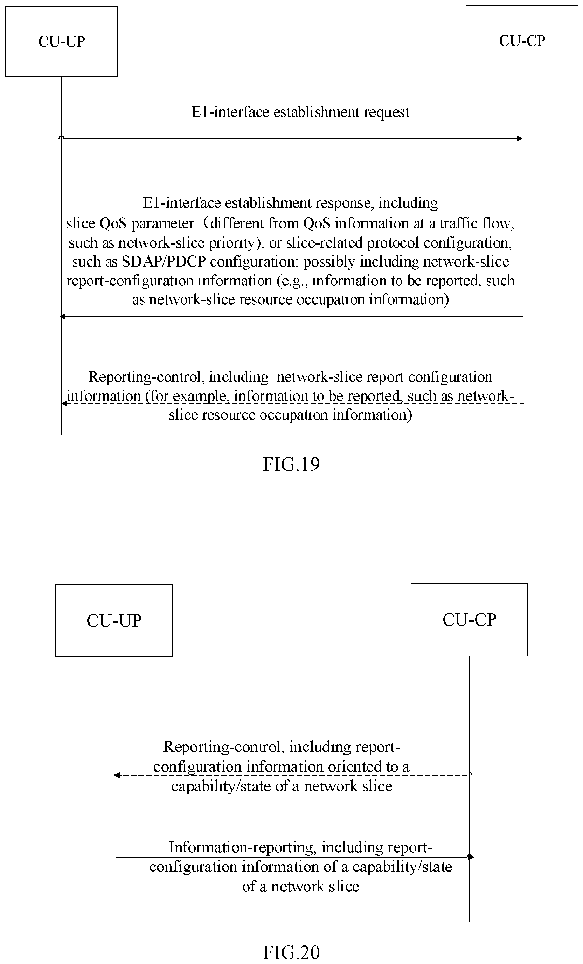

In a specific embodiment of the present disclosure, as shown in FIG. 19, the method of processing the network slice further includes: sending an E1-interface establishment request to a CU-UP by a CU-CP; sending an E1-interface establishment response to the CU-CP by the CU-UP; and sending a reporting-control to the CU-UP by the CU-CP.

In this embodiment, the CU-CP (abbreviated as CP) sends some or all of following information to the CU-UP (abbreviated as UP) through the E1 interface establishment response message: 1) network-slice quality-of-service information: a) for example, a resource type of a network slice, such as if a QoS flow feature of a QoS Flow carried in the resource type, then the access network may make an auxiliary judgement on a configuration of the UP based on a mapping rule between a QoS flow and a DRB; the UP may consider different combinations of QoS flows of slices, and provide different SDAP strategies; b) for example, a network-slice delay budget, which enables the UP to make a decision on processes of PDCP configuration and processing of a network slice, including, but not limited to, configuration of a reordering window and the like; c) a reflection quality-of-service indicator (RQI) of a network slice, which is a parameter at a slice level, the value of the RQI is 0 or 1; when the indicator is 1, it indicates that all QoS traffic flows of all users of the slice adopt quality-of-service reflection; the access network may make a decision on whether mapping of an uplink QoS traffic flow to a DRB (Data Radio Bearer) is determined by referring to a mapping mode of the same downlink QoS traffic flow, that is, whether the access network also adopts the quality-of-service reflection mode; d) network-slice notification control information, which indicates that for a specific session of a network slice, if the UP is incapable of meeting a demand of the session, incapability of the UP needs to be fed back to the CP, and if a capability of the network slice is recovered, the CP is informed of this capability again, wherein the notification control information at a slice level herein describes that for any session or any traffic flow inside the network slice, if the UP is incapable of meeting the demand of a corresponding service, then the CP needs to be informed of the incapability, and if the capability of the UP is recovered, the CP is informed of this capability recover information, so that the CP may re-consider a service connection; 2) slice-related protocol configuration, wherein the CP knows QoS information of a slice, and maps the QoS information to a protocol configuration of the UP, such as a slice having a low latency is not configured with a reordering window or is configured with a narrow reordering window at PDCP; and the UP, if the information is received, may configure a protocol stack; 3) network-slice report configuration/control information, wherein for example, the CP may want to know information of available network resources at a UP side, such as whether a current corresponding network slice has available resources so as to determine selection of a UP for a corresponding user.

The network-slice report configuration/control information may be carried by an independent reporting signaling, such as a measurement-reporting related signaling, however, may be transferred along with the E1-interface establishment response.

In a specific embodiment of the present disclosure, as shown in FIG. 20, the method of processing a network slice further includes: sending a reporting-control to the CU-UP by the CU-CP; sending information-reporting to the CU-CP by the CU-UP.

In this embodiment, the UP sends following information to the CP through a reporting-control signaling including a measurement-reporting signaling: 1) capability and state information of a network slice of an access network; a) for example, information of a network resource of a slice available at the UP side, specifically such information may be whether a current corresponding network slice has available resources, so as to determine selection of a UP for a user of a slice; b) for example, the UP finds that the number of the corresponding slice resources is less than a certain threshold, and reports information of the limited slice resource to the CP so that the CP can perform adjustment of a UP selection policy for a slice.

The reporting information and the reporting occasion/period may be configured by the CP in advance through a reporting-control signaling.

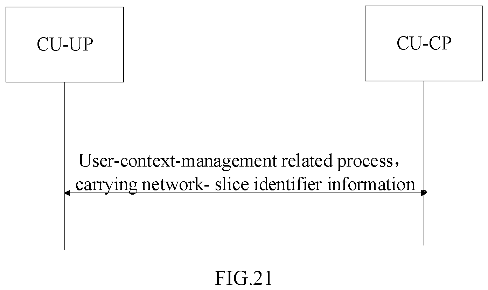

In a specific embodiment of the present disclosure, as shown in FIG. 21, the method of processing a network slice further includes: initiating a user-context management process signaling to the CU-CP by the CU-UP; sending network-slice identifier information to the CU-UP by the CU-CP.

In this embodiment, the CP sends part or all of following information to the UP through the user-context management process signaling mainly including the user-context establishment request signaling and the user-context modification request signaling: 1) network-slice quality-of-service information, wherein a definition of this information is different from the network-slice information in FIG. 19; the network-slice information of FIG. 19 is applied to management of a network slice at a site, the network slice at the site contains a plurality of data sessions for a plurality of users, whereas control of FIG. 21 is directed to a management index of various slices of a user; briefly, FIG. 19 is a slice QoS plan at a site level, FIG. 21 is a slice QoS plan at a user level, and the method of FIG. 21 can make differential designs among users in a slice, and can coordinate resource configuration of multiple slices corresponding to a single user; 2) a slice QoS application at a user level, which is basically similar to that at a site level, except that an index corresponding to the application is applied to various users only; 3) network-slice quality-of-service information: a) for example, a resource type of a network slice, such as if a QoS flow feature of a QoS Flow carried in the resource type, then the access network may make an auxiliary judgement on configuration of the UP based on a mapping rule between a QoS flow and a DRB; the UP may provide different SDAP strategies by considering different combinations of QoS Flows of a slice; b) for example, a network-slice delay budget, which enables the UP to make a decision on processes of PDCP protocol configuration and processing of a network slice, including, but not limited to, configuration of a reordering window and the like; c) a reflection quality-of-service indicator (RQI) of a network slice, which is a parameter at a slice level, the value of the RQI is 0 or 1; when the indicator is 1, it indicates that all QoS traffic flows of the user adopt quality-of-service reflection; the access network may make a decision on whether mapping of an uplink QoS traffic flow to a DRB (Data Radio Bearer) is determined by referring to a mapping mode of the same downlink QoS traffic flow, that is, whether the access network also adopts the quality-of-service reflection mode; d) network-slice notification control information, which indicates that for a specific session of a network slice, if the UP is incapable of meeting a demand of the session, incapability of the UP needs to be fed back to the CP, and if a capability of the UP is recovered, then the CP is informed of this capability again, wherein the notification control information at a slice level herein describes that for any session or any traffic flow inside the network slice, if the UP is incapable of meeting the demand of a corresponding service, then the CP needs to be informed of the incapability, and if the capability of the UP is recovered, the CP is informed of this capability recover information, so that the CP may re-consider a service connection; 4) slice-related protocol configuration, wherein the CP knows QoS information of a slice, and maps the QoS information to a protocol configuration of the UP, such as a slice having a low latency is not configured with a reordering window or is configured with a narrow reordering window at the PDCP; and the UP, if the information is received, may configure a protocol stack; 5) network-slice report configuration/control information, wherein for example, the CP may want to know information of available network resources of various slices of the user at the UP side, such as whether a current corresponding network slice has available resources.

In addition, quality-of-service information at a session level may also be provided through a user-related signaling, to provide a comprehensive indicator requirement of multiple QoS flows of the current slice session.

Embodiments of the present disclosure further provide a method of processing network-slice information. The method includes: sending network-slice information, wherein the network-slice information includes at least one of following: network-slice available resource information, network-slice quality-of-service information, network-slice networking information, network-slice resource allocation information, network-slice access control information, network-slice report configuration/control information, network-slice user information, network-slice service information, network-slice resource-demand change information; network-slice resource occupation information, network-slice interference-coordination information, and network-slice movement control information.

It should be noted that, in this embodiment, sending the network-slice information may be sending the network-slice information by the core-network node, the network administration-and-management entity or other access-network node to the access-network node as described in any of the foregoing embodiments, and any of the foregoing specific implementations described in any of the above embodiments is applicable to this embodiment, and the same technical effect can be achieved.

Embodiments of the present disclosure further provide a communication device. The communication device includes a transceiver, wherein the transceiver is configured to send network-slice information, wherein the network-slice information includes at least one of following: network-slice available resource information, network-slice quality-of-service information, network-slice networking information, network-slice resource allocation information, network-slice access control information, network-slice report configuration/control information, network-slice user information, network-slice service information, network-slice resource-demand change information; network-slice resource occupation information, network-slice interference-coordination information, and network-slice movement control information.

The communication device may be a core-network node, a network administration-and-management entity, or other access-network nodes. Specifically, if the communication device is the core-network node, then the core-network node includes a transceiver configured to send network-slice information, wherein the network-slice information is at least one of the pieces of network-slice information as described above.

If the communication device is the network administration-and-management entity, the network administration-and-management entity includes a transceiver configured to send network-slice information, wherein the network-slice information is at least one of the pieces of network-slice information as described above.

If the communication device is the another access-network node, the access-network node includes a transceiver configured to send network-slice information, wherein the network-slice information is at least one of the pieces of network-slice information as described above.

In addition, the communication device sends the network-slice information to the access-network node described in any of the foregoing embodiments, and all specific implementations in any of the foregoing embodiments are applicable to this embodiment, and the same technical effect can be achieved.

Embodiments of the present disclosure further provide an access-network node. The access-network node includes a processor, a storage storing a computer program, wherein when the computer program is executed by the processor, the processor implements the method described above; wherein the processor and the storage are connected through a bus or an interface. The access-network node may be a network device, such as a base station.

Embodiments of the present disclosure further provide a computer-readable storage medium. The computer-readable storage medium includes instructions, wherein when the instructions are executed by a computer, the computer performs the methods described above.

The foregoing are optional embodiments of the present disclosure. It should be noted that several modifications and embellishments may also be made by those of ordinary skills in the art without departing from the principles described herein, and such modifications and embellishments shall also be considered to fall within the protection scope of the present disclosure.

## Claims

1. A method of processing a network slice, the method being applied in an access-network node, the method comprising:
receiving network-slice information, wherein the network-slice information comprises at least one of following:
network-slice available resource information;
network-slice quality-of-service information;
network-slice networking information;
network-slice resource allocation information;
network-slice access control information;
network-slice report configuration/control information;
network-slice user information;
network-slice service information;
network-slice resource-demand change information;
network-slice resource occupation information;
network-slice interference-coordination information;
network-slice movement control information.

2. The method according to claim 1, wherein,
the network-slice available resource information comprises at least one of following: a remaining resource available to a network slice, and remaining number of users admissible by a network slice;
or
the network-slice quality-of-service information comprises at least one of following: a network-slice resource type; a network slice priority; a network-slice delay budget; a network-slice packet-error-rate index; a network-slice aggregated bit rate; a network-slice guaranteed bit rate; a network-slice averaging window size; the number of users admissible by a network slice; a network-slice allocation reservation priority (ARP); a network-slice reflection quality-of-service indication (RQI); network-slice notification control information;
or
the network-slice networking information comprises at least one of following: network-slice configuration information, network-slice activation information, and network-slice deactivation information;
or
the network-slice resource allocation information comprises at least one of following: the number of network slice resources; a proportion of network slice resources; network-slice guaranteed resources; network-slice aggregated resources; network-slice resource-sharing threshold, wherein the resources comprise at least one of following resources: a radio network resource, a computing resource, and a storage resource;
or
the network-slice report configuration/control information comprises at least one of following: network-slice reporting information and information-reporting time/occasion information, wherein the network-slice reporting information comprises at least one of following: network-slice available resource information, network-slice performance monitoring information, network-slice traffic-volume information, network-slice radio link/coverage quality information, and network-slice resource occupation information;
or
the network-slice user information comprises at least one of following: location change information of a user of a network slice, service-type change information of a user of a network slice, and traffic-volume change information of a user of a network slice;
or
the network-slice service information comprises at least one of following: network-slice service-type change information, network-slice traffic-volume change information, and network-slice user-amount change information;
or
the network-slice resource-demand change information comprises network-slice resource-occupancy change information;
or
the network-slice movement control parameter comprises at least one of following: slice cell-reselection information and slice mobility information.

3. The method according to claim 1, wherein receiving the network-slice information is specifically:
receiving the network-slice information from a core-network node, an access-network node, and/or a network administration-and-management entity.

4. The method according to claim 1, wherein receiving the network-slice information is specifically:
receiving the Quality-of-Service information in the network-slice information from a core-network node;
and/or,
receiving the network-slice networking information, the network-slice resource allocation information, the network-slice report configuration/control information, the network-slice resource-demand change information and/or the network-slice movement control parameter in the network-slice information from a core-network node and/or a network administration-and-management entity;
and/or,
receiving, from a neighboring access-network node, the network-slice available resource information, the network-slice resource occupancy information, the network-slice interference-coordination information, and/or the network-slice movement control parameter in the network-slice information.

5. The method according to claim 1, wherein receiving the network-slice information is specifically:
receiving network-slice information, from a core-network node, in the network-slice information through an interface establishment signaling, an access-network-node configuration updating signaling, a core-network-node configuration updating signaling, an information-reporting / reporting-configuration / reporting-control signaling, a Quality-of-Service information updating signaling, a network-slice configuration updating signaling, a user-related signaling or a session-related signaling between the access-network node and the core-network node; and/or,
receiving network-slice information, from a neighboring access-network node, in the network-slice information through a resource state signaling, an interface establishment signaling, an access-network-node configuration updating signaling, a dual-connection related signaling, a mobility modification signaling, a Quality-of-Service information updating signaling, a network-slice configuration updating signaling, a user-related signaling or a session-related signaling between access-network nodes.

6. The method according to claim 1, wherein the access-network node is a base station comprising a centralized unit and a distributed unit; receiving the network-slice information is specifically:
receiving the network-slice information from a core network by the centralized unit;
and/or
receiving the network-slice information from a neighboring access-network node by the centralized unit;
and/or
receiving network-slice information from a network administration-and-management entity by the centralized unit and/or the distributed unit.

7. The method according to claim 6, further comprising:
sending, by the centralized unit to the distributed unit, at least one of following received by the centralized unit:
network-slice quality-of-service information; network-slice protocol configuration information; system information dedicated to a network slice; network-slice identifier information; network-slice resource allocation information; network-slice report configuration/control information.

8. The method according to claim 7, wherein the centralized unit and the distributed unit transmit the network-slice information through an interface establishment signaling, a centralized-unit configuration updating signaling, a distributed-unit configuration updating signaling, an information-reporting /reporting-configuration /reporting-control signaling, a user-related signaling or a session-related signaling.

9. The method according to claim 6, wherein receiving the network-slice information from the network administration-and-management entity by the distributed unit specifically is:
receiving, by the distributed unit, at least one of following sent by the network administration-and-management entity: resource allocation information, network-slice networking information, network-slice reporting configuration.

10. The method according to claim 1, wherein the access-network node is a base station comprising a centralized unit and a distributed unit;
the centralized unit comprises a control-plane unit and a user-plane unit, and receiving the network-slice information specifically comprises:
receiving a portion, from a core-network node and/or a neighboring access-network node, of the network-slice information by the control-plane unit; and/or
receiving a portion, from the network administration-and-management entity, of the network-slice information by the control-plane unit and/or the user-plane unit.

11. The method according to claim 10, further comprising:
sending, by the control-plane unit to the user-plane unit, at least one of following received by the control-plane unit:
network-slice quality-of-service information,
network-slice protocol configuration information,
network-slice identifier information,
network-slice resource allocation information,
network-slice report configuration/control information.

12. The method according to claim 10, wherein the user-plane unit receives the network-slice resource allocation information, the network-slice networking information, and/or the network-slice report configuration/control information, in the network-slice information, from the network administration-and-management entity.

13. The method according to claim 11, wherein the control-plane unit and the user-plane unit transmit the network-slice information through an interface establishment signaling, a control-plane-unit configuration update signaling, a user-plane configuration updating signaling, an information-reporting /reporting-configuration/reporting-control signaling, a user-related signaling or a session-related signaling between the control-plane unit and the user-plane unit.

14. The method according to claim 1, further comprising:
reporting capability information and/or state information of the network slice.

15. The method according to claim 14, wherein the access-network node is a base station comprising a centralized unit and a distributed unit;
reporting the capability information and/or state information of the network slice specifically comprises: sending the capability information and/or state information of the network slice to the centralized unit by the distributed unit.

16. The method according to claim 15, wherein reporting the capability information and/or state information of the network slice further comprises:
receiving, by the centralized unit, the capability information and/or state information of the network slice sent from the distributed unit.

17. The method according to claim 15, wherein reporting the capability information and/or state information of the network slice further comprises:
reporting, by the centralized unit, the received capability information and/or state information of the network slice through a measurement reporting signaling.

18. The method according to claim 15, wherein the access-network node is a base station comprising a centralized unit and a distributed unit, and
reporting the capability information and/or state information of the network slice further comprises: reporting, by the distributed unit, the capability information and/or state information of the network slice through a measurement reporting signaling.

19. The method according to claim 14, wherein the access-network node is a base station comprising a centralized unit and a distributed unit; the centralized unit comprises a control-plane unit and a user-plane unit,
wherein reporting the capability information and/or state information of the network slice specifically comprises sending the capability information and/or state information of the network slice to the control-plane unit by the user-plane unit.

20. The method according to claim 14, wherein the access-network node is a base station comprising a centralized unit and a distributed unit; the centralized unit comprises a control-plane unit and a user-plane unit,
wherein reporting the capability information and/or state information of the network slice further comprises receiving, by the control-plane unit, the capability information and/or state information of the network slice sent from the user-plane unit by the control-plane unit.

21. The method according to claim 19, wherein reporting the capability information and/or state information of the network slice further comprises sending the capability information and/or state information by the user-plane unit through a measurement reporting signaling.

22. The method according to claim 14, wherein the state information comprises at least one of following: network-slice available resource information, network-slice performance monitoring information, network-slice traffic-volume information, network-slice radio link/coverage quality information, and network-slice resource occupation information.

23. The method according to claim 14, wherein reporting the capability information and/or state information of the network slice specifically is reporting, by the access-network node, the capability information and/or state information of the network slice to a core-network node, a neighboring access-network node and/or a network administration-and-management entity.

24. The method according to claim 1, wherein the network-slice information comprises network-slice identifier information.

25. An access-network node, wherein the access-network node is configured for receiving network-slice information;
wherein the network-slice information comprises at least one of following:
network-slice available resource information;
network-slice quality-of-service information;
network-slice networking information;
network-slice resource allocation information;
network-slice access control information;
network-slice report configuration/control information;
network-slice user information;
network-slice service information;
network-slice resource-demand change information;
network-slice resource occupation information;
network-slice interference-coordination information;
network-slice movement control information.

26. The access-network node according to claim 25, wherein,
the network-slice available resource information comprises at least one of following: a remaining resource available to a network slice, and remaining number of users admissible by a network slice;
or
the network-slice quality-of-service information comprises at least one of following: a network-slice resource type; a network slice priority; a network-slice delay budget; a network-slice packet-error-rate index; a network-slice aggregated bit rate; a network-slice guaranteed bit rate; a network-slice averaging window size; the number of users admissible by a network slice; a network-slice allocation reservation priority (ARP); a network-slice reflection quality-of-service indication (RQI); network-slice notification control information;
or
the network-slice networking information comprises at least one of following: network-slice configuration information, network-slice activation information, and network-slice deactivation information;
or
the network-slice resource allocation information comprises at least one of following: the number of network slice resources; a proportion of network slice resources; network-slice guaranteed resources; network-slice aggregated resources; network-slice resource-sharing threshold, wherein the resources comprise at least one of following resources: a radio network resource, a computing resource, and a storage resource;
or
the network-slice report configuration/control information comprises at least one of following: network-slice reporting information and information-reporting time/occasion information, wherein the network-slice reporting information comprises at least one of following: network-slice available resource information, network-slice performance monitoring information, network-slice traffic-volume information, network-slice radio link/coverage quality information, and network-slice resource occupation information;
or
the network-slice user information comprises at least one of following: location change information of a user of a network slice, service-type change information of a user of a network slice, and traffic-volume change information of a user of a network slice;
or
the network-slice service information comprises at least one of following: network-slice service-type change information, network-slice traffic-volume change information, and network-slice user-amount change information;
or
the network-slice resource-demand change information comprises network-slice resource-occupancy change information;
or
the network-slice movement control parameter comprises at least one of following: slice cell-reselection information and slice mobility information.

27. The access-network node according to claim 25, wherein the access-network node is specifically configured for receiving the network-slice information from a core-network node, an access-network node, and/or a network administration-and-management entity.

28. The access-network node according to claim 25, wherein the access-network node is a base station comprising a centralized unit and a distributed unit;
the centralized unit is specifically configured for receiving the network-slice information from a core network;
and/or
the centralized unit is specifically configured for receiving the network-slice information from a neighboring access-network node;
and/or
the centralized unit and/or the distributed unit is specifically configured for receiving network-slice information from a network administration-and-management entity.

29. The access-network node according to claim 25, wherein the access-network node is a base station comprising a centralized unit and a distributed unit;
the centralized unit comprises a control-plane unit and a user-plane unit, and receiving the network-slice information specifically comprises:
receiving a portion, from a core-network node and/or a neighboring access-network node, of the network-slice information by the control-plane unit; and/or
receiving a portion, from the network administration-and-management entity, of the network-slice information by the control-plane unit and/or the user-plane unit.

30. The access-network node according to claim 25, wherein the access-network node is further configured for reporting capability information and/or state information of the network slice.

31. The access-network node according to claim 25, wherein the network-slice information comprises network-slice identifier information.

32. A method of processing network-slice information, the method being applied in base station comprising a centralized unit and a distributed unit, the method comprising:
sending at least one of following to the distributed unit by the centralized unit:
network-slice identifier information;
network-slice quality-of-service information;
network-slice protocol configuration information;
system information dedicated to a network slice;
network-slice resource allocation information;
network-slice report configuration/control information.

33. The method according to claim 32, wherein the centralized unit and the distributed unit transmit the network-slice information through an interface establishment signaling, a centralized-unit configuration updating signaling, a distributed-unit configuration updating signaling, an information-reporting /reporting-configuration /reporting-control signaling, a user-related signaling or a session-related signaling.

34. A method of processing network-slice information, the method being applied in a base station comprising a control-plane unit and a user-plane unit, the method comprising:
sending, by the control-plane unit to the user-plane unit, at least one of following:
network-slice identifier information;
network-slice quality-of-service information;
network-slice protocol configuration information;
network-slice resource allocation information;
network-slice report configuration/control information.

35. The method according to claim 34, wherein the control-plane unit and the user-plane unit transmit the network-slice information through an interface establishment signaling, a control-plane-unit configuration update signaling, a user-plane configuration updating signaling, an information-reporting /reporting-configuration /reporting-control signaling, a user-related signaling or a session-related signaling between the control-plane unit and the user-plane unit.

36. Abase station, comprising:
a centralized unit and a distributed unit, wherein the centralized unit is specifically configured for:
sending at least one of following to the distributed unit:
network-slice quality-of-service information;
network-slice protocol configuration information;
system information dedicated to a network slice;
network-slice identifier information;
network-slice resource allocation information;
network-slice report configuration/control information.

37. The base station according to claim 36, wherein the centralized unit and the distributed unit transmit the network-slice information through an interface establishment signaling, a centralized-unit configuration updating signaling, a distributed-unit configuration updating signaling, an information-reporting /reporting-configuration /reporting-control signaling, a user-related signaling or a session-related signaling.

38. Abase station, comprising:
a control-plane unit and a user-plane unit, wherein the control-plane unit is specifically configured for sending, to the user-plane unit, at least one of following:
network-slice quality-of-service information;
network-slice protocol configuration information;
network-slice identifier information;
network-slice resource allocation information;
network-slice report configuration/control information.

39. The base station according to claim 38, wherein the control-plane unit and the user-plane unit transmit the network-slice information through an interface establishment signaling, a control-plane-unit configuration update signaling, a user-plane configuration updating signaling, an information-reporting /reporting-configuration /reporting-control signaling, a user-related signaling or a session-related signaling between the control-plane unit and the user-plane unit.

40. A method of processing network-slice information, comprising:
sending network-slice information, wherein the network-slice information comprises at least one of following:
network-slice available resource information;
network-slice quality-of-service information;
network-slice networking information;
network-slice resource allocation information;
network-slice access control information;
network-slice report configuration/control information;
network-slice user information;
network-slice service information;
network-slice resource-demand change information;
network-slice resource occupation information;
network-slice interference-coordination information;
network-slice movement control information.

41. A communication device, comprising:
a transceiver, configuring for sending network-slice information, wherein the network-slice information comprises at least one of following:
network-slice available resource information;
network-slice quality-of-service information;
network-slice networking information;
network-slice resource allocation information;
network-slice access control information;
network-slice report configuration/control information;
network-slice user information;
network-slice service information;
network-slice resource-demand change information;
network-slice resource occupation information;
network-slice interference-coordination information;
network-slice movement control information.

42. An access-network node, comprising:
a processor, a storage having a computer program stored on the storage,
wherein when the computer program is executed by the processor, the processor implements the method according to any one of claims 1-24 or the method according to any one of claims 32-35.

43. A computer-readable storage medium, comprising:
instructions, wherein when the instructions are executed by a computer, the computer implements the method the method according to any one of claims 1-25 or the method according to any one of claims 32-35.
